# FASCICULE DE BREVET EUROPEEN

(11) **EP 3 793 814 B1**
(45) Date de publication et mention de la délivrance du brevet: **16.10.2024**
(21) Numéro de dépôt: 19742426.0
(22) Date de dépôt: 13.05.2019
(51) Int. Cl.: B29D 30/48, B21F 37/02, B21F 15/06

(54) **PROCEDE ET INSTALLATION DE FABRICATION D'UNE TRINGLE TRESSEE POUR BANDAGE PNEUMATIQUE, AVEC PLIAGE D'UN TRONCON EXCEDENTAIRE DU FIL DE TRESSE**
VERFAHREN UND ANLAGE ZUR HERSTELLUNG EINES GEFLOCHTENEN WULSTKERNS FÜR EINEN LUFTREIFEN MIT FALTUNG EINES ÜBERSTEHEHNDEN ENDES DES GEFFLOCHTENEN GARNS
PROCESS AND PLANT FOR MANUFACTURNG A BRAIDED BEAD CORE FOR A PNEUMATIC TIRE WITH FOLDING OF A PROTRUDING END OF THE BRAIDED YARN

(30) Priorité: 14.05.2018 FR 1854009
(43) Date de publication de la demande: 24.03.2021
(73) Titulaire: COMPAGNIE GENERALE DES ETABLISSEMENTS MICHELIN, 63000 Clermont-Ferrand (FR)
(72) Inventeur: FAURE, Yann, 63040 CLERMONT-FERRAND CEDEX 9 (FR); MARTINEZ, Raphael, 63040 CLERMONT-FERRAND CEDEX 9 (FR)
(74) Mandataire: M.F.P. Michelin
(86) Numéro de dépôt international: PCT/FR2019/051072
(87) Numéro de publication internationale: WO 2019/220045

(56) Documents cités:
- EP-A1- 0 433 917
- EP-A1- 0 433 918
- EP-A1- 2 537 667
- EP-A2- 0 442 242
- FR-A1- 2 234 224
- JP-A- 2007 160 640
- US-A- 1 616 337
- US-A- 3 168 912
- US-A- 942 732

## Description

La présente invention concerne le domaine de la fabrication des tringles de renfort qui sont destinées à renforcer des bandages, notamment des bandages pneumatiques, afin d'assurer la tenue de tels bandages sur une jante.

De façon connue en soi, une tringle se présente sous la forme d'un élément annulaire en matériau rigide, généralement métallique, qui peut être constitué d'un brin monolithique ou, de préférence, d'un toron comprenant plusieurs brins entrelacés.

Lors de la fabrication d'une tringle, il est donc connu de prévoir une étape de tressage au cours de laquelle on enroule un fil de tresse en spires hélicoïdales, autour d'une âme qui est fermée en anneau sur elle-même, de sorte à obtenir un tore tressé qui formera le corps de la tringle.

Il est également connu, notamment par le document JP-2007-160640, de prévoir, lors de l'opération de tressage, des surplus de longueur de fil de tresse qui forment, à chacune des deux extrémités du fil de tresse, un tronçon excédentaire, puis d'ajuster ensuite en longueur ces tronçons excédentaires par une coupe qui est réalisée après l'opération de tressage, et ce de manière à pouvoir réunir ensuite les extrémités du fil de tresse au moyen d'un manchon serti, lequel permet de maintenir ledit fil de tresse fermé sur lui-même, ce qui assure la cohésion du tore tressé et donc plus globalement de la tringle correspondante.

D'autres procédés de tressage dans lesquels on enroule un fil de tresse sont décrits dans le demandes EP 0433 918 A1, EP 0 442 242 A2 et le brevet US 942,732.

Les inventeurs ont toutefois constaté qu'il pouvait être parfois difficile de positionner convenablement et rapidement les tronçons excédentaires de fil de tresse pour l'opération de coupe, sans altérer le tore tressé, ni prendre le risque d'une coupe imprécise qui pourrait conduire à un assemblage impropre du manchon.

Les objets assignés à l'invention visent par conséquent à remédier aux inconvénients susmentionnés et proposer un nouveau procédé de fabrication de tringle qui garantisse un traitement efficace et reproductible des tores tressés après tressage, y compris à haute cadence de production.

Les objets assignés à l'invention sont atteints au moyen d'un procédé de fabrication d'une tringle destinée au renfort d'un bandage, tel qu'un bandage pneumatique, selon la revendication 1, ledit procédé comprenant une étape (S1) de tressage au cours de laquelle on enroule un fil de tresse en spires hélicoïdales autour de, et le long de, une ligne génératrice qui est fermée en anneau sur elle-même autour d'un axe « dit axe principal », et l'on décrit ainsi avec ledit fil de tresse plus d'un tour complet en azimut autour de l'axe principal, de sorte à former, autour dudit axe principal, un élément de tringle dit « tore tressé » au sein duquel le fil de tresse présente d'une part une portion dite « tronçon d'enroulement » qui correspond aux spires hélicoïdales et qui occupe un volume dit « volume de tresse », et d'autre part, dans le prolongement dudit tronçon d'enroulement, un surplus de longueur de fil de tresse dit « tronçon excédentaire », ledit procédé étant caractérisé en ce qu'il comprend, après l'étape de tressage (S1), une étape de pliage (S2) au cours de laquelle on déforme plastiquement le tronçon excédentaire par pliage, de manière à former un coude qui fait diverger le tronçon excédentaire par rapport aux spires hélicoïdales et saillir au moins en partie ledit tronçon excédentaire par rapport au volume de tresse du tore tressé.

Avantageusement, l'opération de pliage prévue par l'invention permet de rendre le tronçon excédentaire aisément accessible et manipulable par un outil extérieur au tore tressé.

Plus particulièrement, cette configuration coudée permet notamment, comme on le verra par la suite, de récupérer facilement le tronçon excédentaire et d'agir aisément sur ce dernier pour provoquer une légère flexion élastique locale d'une portion du fil de tresse dite « tronçon de spire terminale », qui relie le tronçon d'enroulement au coude, ladite flexion élastique locale étant d'une part suffisante pour rendre ledit tronçon de spire terminale accessible à un outil de coupe puis à un outil de jonction par manchonnage, et d'autre part suffisamment modérée pour permettre sensiblement un retour élastique en place, contre le tore tressé, des extrémités du fil de tresse après que lesdites extrémités du fil de tresse ont été réunies par l'opération de manchonnage.

De la sorte, l'invention permet de procéder, de manière maîtrisée et reproductible d'une tringle à l'autre, aux opérations de tressage puis de coupe et de manchonnage. On peut ainsi obtenir de façon systématique une tringle qui satisfait aux exigences de robustesse et de qualité de finition requises.

On notera également que le coude formé par le tronçon excédentaire peut avantageusement contribuer à stabiliser, à la manière d'un crochet d'arrêt, le fil de tresse sur le tore tressé, après les opérations de tressage puis de pliage, et avant les opérations de coupe et de manchonnage, ce qui permet de manipuler aisément le tore tressé, sans risque d'altération, par exemple pour transporter ledit tore tressé vers un poste de manchonnage distant et distinct du poste de tressage, ou bien encore de stocker le tore tressé, après les opérations de tressage et de pliage, dans un espace de stockage tampon, en attente des opérations de coupe puis de manchonnage.

Ceci permet d'optimiser l'agencement du parc machine et la gestion du flux de production des tringles, en prenant notamment en considération les capacités respectives et les temps de cycle respectifs du poste de tressage et du poste de manchonnage. En particulier, il est ainsi envisageable de prévoir un seul et même poste de manchonnage affecté au traitement des tores tressés issus de plusieurs postes de tressage distincts.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue de face, un exemple de tore tressé résultant d'une étape de tressage selon l'invention.
La figure 2 illustre, selon une vue de face, le tore tressé de la figure 1 après l'étape de pliage selon l'invention.
La figure 3 illustre, selon une vue de détail de face, une partie du tore tressé de la figure 1 et d'un tronçon excédentaire de celui-ci après l'étape de tressage, et avant l'étape de pliage.
La figure 4 illustre, selon une vue de détail de face, le principe de mise en œuvre d'une étape de pliage selon l'invention, et l'agencement, qui résulte de ladite étape de pliage, de la partie de tore tressé et de son tronçon excédentaire telle que représentée sur la figure 3.
Les figures 5A et 5B illustrent, selon des vues schématiques de face, le principe d'une étape d'enfoncement selon l'invention, au cours de laquelle on manipule le tore tressé des figures 2 et 4 en exerçant une poussée sur les tronçons excédentaires du fil de tresse, de manière à exposer les tronçons correspondants de spires terminales du fil de tresse en saillie par rapport au volume tressé, et ainsi pouvoir couper à la longueur souhaitée, puis joindre par manchonnage, lesdits tronçons de spires terminales du fil de tresse.
La figure 5C illustre, selon une vue schématique de face, le principe d'une étape de coupe des extrémités du fil de tresse, suivie d'une étape de jonction au cours de laquelle on réunit par un manchon serti les extrémités du fil de tresse, telles que lesdites extrémités ont été ajustées en longueur lors de l'étape de coupe.
Les figure 6 et 7 illustrent, respectivement selon une vue en perspective et une vue de face, une installation de fabrication de tringle permettant de mettre en œuvre, ici sur un même poste, une étape de tressage puis une étape de pliage selon l'invention.
La figure 8 illustre, selon une vue en perspective, un sous-ensemble d'actionnement d'un poinçon basculant utilisé comme outil de pliage sur l'installation des figures 6 et 7.
La figure 9 présente une vue en coupe du tranchant du poinçon de la figure 8, destiné à être appliqué contre le tronçon excédentaire du fil de tresse pour provoquer le pliage dudit fil de tresse.

La présente invention concerne un procédé de fabrication d'une tringle destinée au renfort d'un bandage, tel qu'un bandage pneumatique destiné à équiper une roue de véhicule.

Ledit procédé comprend une étape (S1) de tressage au cours de laquelle on enroule un fil de tresse 1 en spires hélicoïdales 2 autour de, et le long de, une ligne génératrice L3 qui est fermée en anneau sur elle-même autour d'un axe « dit axe principal » Z3, et l'on décrit ainsi avec ledit fil de tresse 1 plus d'un tour complet en azimut autour de l'axe principal Z3.

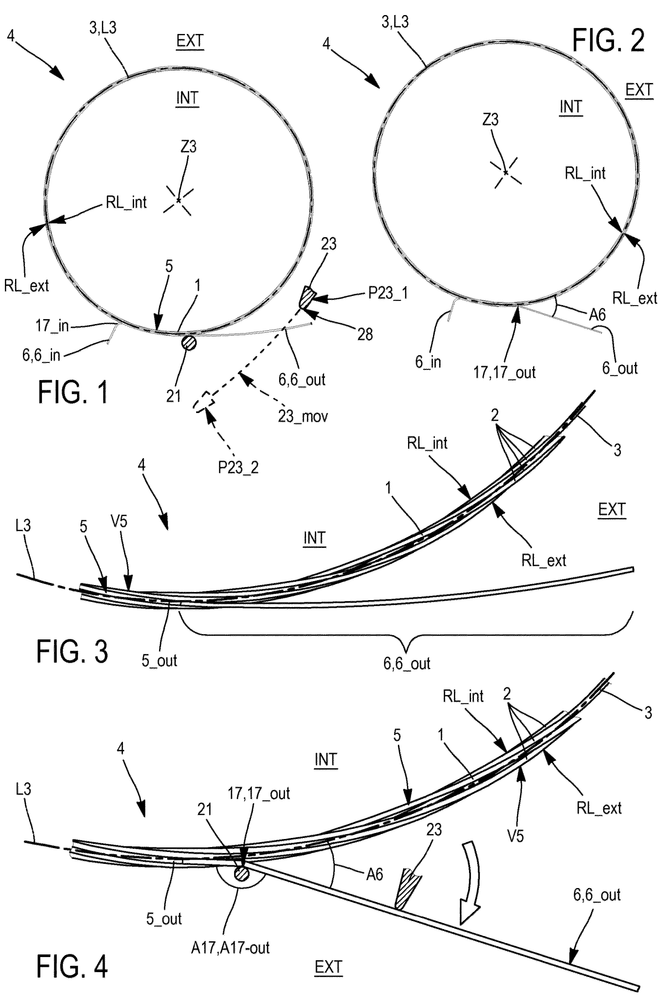

De la sorte, on forme, autour dudit axe principal Z3, un élément de tringle dit « tore tressé » 4, tel que cela est illustré sur la figure 1.

Au sein dudit tore tressé 4, le fil de tresse 1 présente d'une part une portion de longueur dite « tronçon d'enroulement » 5 qui correspond aux spires hélicoïdales 2 et qui occupe un volume dit « volume de tresse » V5, et d'autre part, à la suite dudit tronçon d'enroulement 5, un surplus de longueur de fil de tresse dit « tronçon excédentaire » 6, tel que cela est notamment visible sur les figures 1 et 3.

Le tronçon d'enroulement 5 correspondra à l'ensemble de la longueur du fil de tresse 1 sur laquelle ledit fil de tresse est effectivement conformé en des spires hélicoïdales 2, dont l'agencement rend lesdites spires 2 potentiellement compatibles avec leur intégration définitive dans la tringle finie.

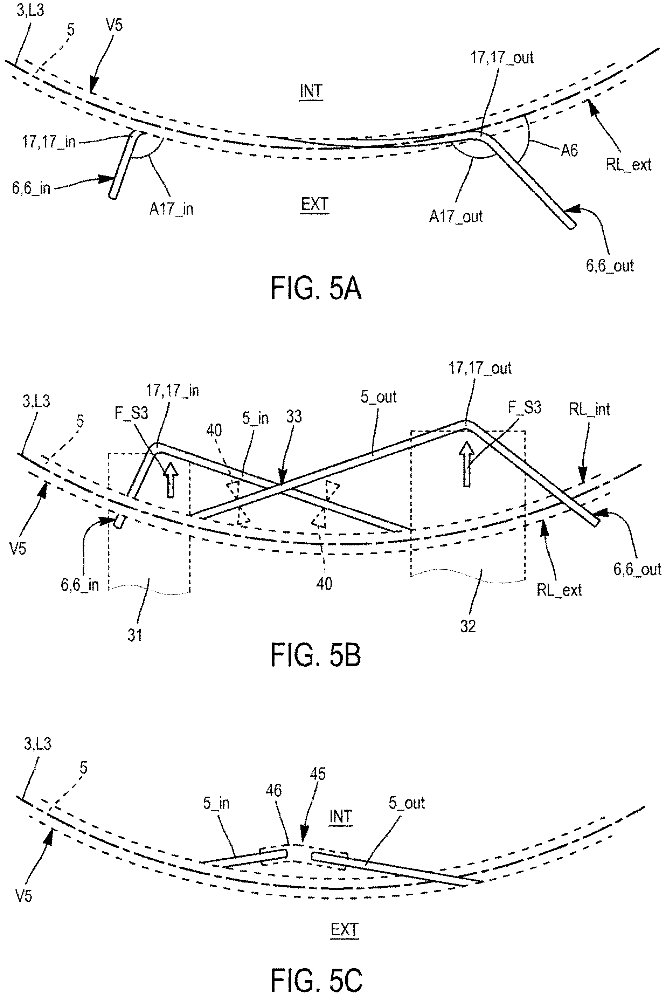

En pratique ledit tronçon d'enroulement 5 peut présenter initialement, dans le tore tressé 4, une longueur enroulée en spires hélicoïdales 2 qui est légèrement supérieure à la longueur totale des spires hélicoïdales 2 qui seront effectivement conservées définitivement au sein de la tringle finie, et ce afin de prévoir, en réserve, aux extrémités longitudinales dudit tronçon d'enroulement 5, des tronçons de spires terminales 5_in, 5_out, qui présentent un agencement hélicoïdal sensiblement voire exactement identique à celui des autres spires hélicoïdales 2, mais qui pourront être ajustés en longueur par découpe lors du processus de fabrication de la tringle, tel que cela sera décrit plus bas en référence notamment aux figures 5B et 5C.

En tout état de cause, lorsque l'on considère un fil de tresse 1 ayant fait l'objet d'une étape (S1) de tressage selon l'invention, alors le tronçon d'enroulement 5 couvre donc, au moins, la totalité de la longueur dudit fil de tresse 1 qui sera destinée à rester à demeure au sein de la tringle finie.

Le tronçon excédentaire 6 sera de préférence provisoire, en ceci qu'il sera de préférence destiné à être retiré, typiquement par une opération de coupe, de manière à ne pas intégrer la tringle finie, contrairement au tronçon d'enroulement 5.

De ce fait, et pour faciliter par ailleurs le façonnage dudit tronçon excédentaire 6 par pliage, ledit tronçon excédentaire 6 présentera de préférence un agencement différent de l'agencement hélicoïdal des spires 2 constitutives du tronçon d'enroulement 5, et, par exemple, ne s'enroulera pas en spires autour de la ligne génératrice L3.

Dans l'absolu, on peut prévoir, selon l'invention, un tronçon excédentaire 6 dans le prolongement de l'une, de l'autre, ou de chacune des deux extrémités longitudinales du tronçon d'enroulement 5, et donc, plus particulièrement, à l'une, à l'autre, ou à chacune des deux extrémités longitudinales du fil de tresse 1.

En particulier, on pourra ainsi prévoir, tel que cela sera détaillé plus bas, d'une part un tronçon excédentaire d'entrée 6_in, situé en amont du tronçon d'enroulement 5, c'est-à-dire qui précède le tronçon d'enroulement dans le sens du tressage, et qui est donc raccordé à un tronçon de spire terminale d'entrée 5_in, et d'autre part un tronçon excédentaire de sortie 6_out, situé en aval du tronçon d'enroulement 5, c'est-à-dire qui est formé après ledit tronçon d'enroulement 5 dans l'ordre du processus de tressage, et qui est donc raccordé à un tronçon de spire terminale de sortie 5_out.

Dans ce qui suit, on considérera de préférence, par commodité de description, que le procédé s'applique, éventuellement exclusivement, à un tronçon excédentaire 6 qui forme un tronçon excédentaire de sortie 6_out, étant bien entendu que les caractéristiques de l'invention, et notamment tout ou partie des étapes de procédé concernées, pourront s'appliquer *mutatis mutandis* à un tronçon excédentaire d'entrée 6_in, ou à la fois à un tronçon excédentaire d'entrée 6_in et à un tronçon excédentaire de sortie 6_out, si l'on prévoit ces deux types de tronçons excédentaires au sein du même tore tressé 4, de chaque côté du tronçon d'enroulement 5.

Par commodité de description, l'expression « tronçon excédentaire 6 » pourra donc désigner indifféremment dans ce qui suit, sauf spécification contraire, aussi bien un tronçon excédentaire de sortie 6_out qu'un tronçon excédentaire d'entrée 6_in.

Avantageusement, le fait d'agencer le fil de tresse 1 sur plus d'un tour complet autour de l'axe principal Z3, c'est-à-dire de couvrir avec ledit fil de tresse 1 plus de 360 degrés en azimut autour de l'axe principal Z3, permet de refermer ledit fil de tresse 1 sur lui-même afin de maintenir la cohésion du tore tressé 4, tel que cela sera détaillé plus bas.

De préférence, on exécute, lorsque l'on enroule le fil de tresse 1 en spires hélicoïdales 2 axées sur l'axe d'hélice que forme la ligne génératrice L3, plusieurs tours complets successifs en azimut autour de l'axe principal Z3, si bien que le tronçon d'enroulement 5 comprend plusieurs séries de spires 2 chevauchantes qui s'étendent, cumulativement, en azimut, sur plusieurs tours autour de l'axe principal Z3. Ceci permet notamment d'obtenir un tore tressé 4 particulièrement robuste et stable.

De préférence, au cours d'une même étape (S1) de tressage, et quel que soit le nombre de tours réalisés par le fil de tresse 1 autour de l'axe principal Z3, le fil de tresse 1 considéré sera enroulé en continu, et inclura donc d'un seul tenant le tronçon d'enroulement 5 et le ou les tronçons excédentaires 6, 6_in, 6_out.

Le fil de tresse 1 pourra être formé dans tout matériau approprié, suffisamment rigide et possédant une résistance à la rupture en traction supérieure à un seuil prédéterminé.

De préférence, le fil de tresse 1 sera métallique, par exemple en acier, éventuellement revêtu, par exemple par un revêtement en, ou à base de, zinc, bronze, cuivre, ou laiton.

En variante, on pourrait toutefois utiliser un autre matériau, par exemple un polymère adéquat, ou un mélange de polymères adéquat, sans sortir du cadre de l'invention.

Quel qu'il soit, le matériau constitutif du fil de tresse 1 présentera bien entendu d'une part une résistance à la traction suffisante pour résister aux contraintes, notamment aux contraintes de traction circonférentielle, que le fil de tresse subira au sein de la tringle lors de l'utilisation du bandage, et d'autre part les propriétés de plasticité et de rigidité intrinsèques requises pour réaliser le pliage plastique prévu par l'invention.

Par ailleurs, à titre indicatif, afin d'offrir une bonne prise sur le tronçon excédentaire 6, permettant la réalisation des différentes étapes du procédé, tout en limitant les pertes de matières lors du processus de fabrication de la tringle, on pourra prévoir que la longueur d'au moins un tronçon excédentaire 6, et notamment que la longueur du tronçon excédentaire de sortie 6_out, représente entre 2 % et 20 % du périmètre (hors-tout) du tore tressé 4, et de préférence entre 3 % et 15 % du périmètre dudit tore tressé 4.

De manière absolue, au moins un tronçon excédentaire 6, et notamment le tronçon excédentaire de sortie 6_out, pourra présenter une longueur comprise entre 5 cm et 20 cm, de préférence entre 7 cm et 15 cm, et ce notamment au sein de tores tressés 4 qui possèdent un diamètre (considéré hors-tout, par rapport à l'axe principal Z3) compris entre 342 mm et 645 mm, et qui sont donc typiquement destinés à des tringles prévues pour équiper des jantes de 13 pouces à 24 pouces.

De préférence, la ligne génératrice L3, qui est représentée en traits mixte sur les figures 1 à 4, 5A à 5C et 7, est matérialisée par une âme 3, monobrin ou multibrins, qui est fermée en anneau sur elle-même autour de l'axe principal Z3.

Ladite âme 3 forme avantageusement un support de tressage, autour et le long duquel on enroule le fil de tresse 1 en spires hélicoïdales 2, tel que dit plus haut.

Ladite âme 3 peut-être monobrin, c'est-à-dire formée d'un seul fil d'âme monolithique, ou, en variante, multibrins, c'est-à-dire formée d'une pluralité de fils d'âme entrelacés.

L'âme 3, ou les fils d'âme, pourront être formés dans tout matériau approprié, suffisamment rigide et possédant une résistance à la rupture en traction supérieure à un seuil prédéterminé.

De préférence, l'âme 3, ou les fils d'âme, seront métalliques, par exemple en acier.

En variante, on pourrait toutefois utiliser un autre matériau, par exemple un polymère adéquat, ou un mélange de polymères adéquat, sans sortir du cadre de l'invention.

Par commodité de description, on pourra assimiler la ligne génératrice L3 et l'âme 3 dans ce qui suit.

L'invention porte également bien entendu sur une installation 9 de fabrication de tringles destinées au renfort d'un bandage, tel qu'un bandage pneumatique, selon la revendication 13.

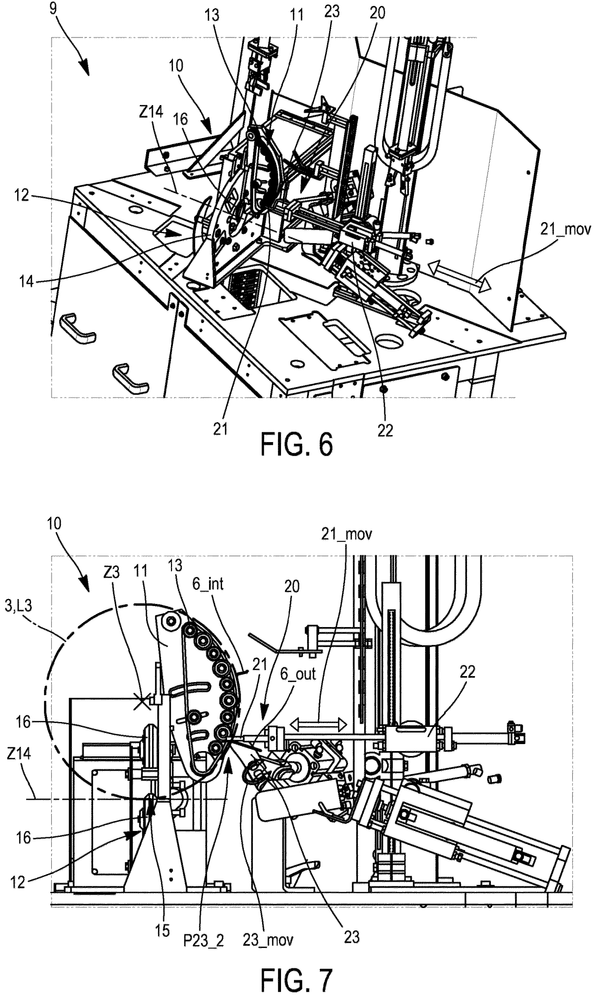

Afin de pouvoir mettre en œuvre une étape (S1) de tressage selon l'invention, ladite installation 9 comprend, tel que cela est visible sur les figures 6 et 7, un poste de tressage 10.

Ledit poste de tressage 10 comporte :
- un support de guidage 11 qui définit une trajectoire qui suit une ligne génératrice L3 qui est fermée en anneau sur elle-même autour d'un axe dit « axe principal » Z3, tel que cela est visible sur la figure 7,
- un dévidoir 12 qui est agencé pour amener un fil de tresse 1 et pour coopérer avec le support de guidage 11 afin d'enrouler ledit fil de tresse 1 en spires hélicoïdales 2 autour de, et le long de, ladite ligne génératrice L3, ici plus préférentiellement autour et le long de l'âme 3, de sorte à former, autour de l'axe principal Z3, un élément de tringle dit « tore tressé » 4, au sein duquel le fil de tresse 1 présente d'une part une portion de longueur dite « tronçon d'enroulement » 5 qui correspond aux spires hélicoïdales 2 et qui occupe un volume dit « volume de tresse » V5, et d'autre part, dans un prolongement dudit tronçon d'enroulement 5, un surplus de longueur de fil de tresse dit « tronçon excédentaire » 6.

Le support de guidage 11 pourra de préférence comprendre un mors à galets 13, motorisé, agencé pour guider et entraîner l'âme 3 en rotation azimutale autour de l'axe principal Z3.

Le dévidoir 12 pourra quant à lui comprendre un support planétaire 14 qui est évidé en son centre pour permettre le passage de l'âme 3, et qui est monté mobile en rotation autour d'un axe central Z14 qui se confond avec la tangente à la ligne directrice L3 au point, dit « point d'assemblage » 15 au niveau duquel le fil de tresse 1 rejoint l'âme 3 et s'enroule sur cette dernière.

De préférence, notamment pour améliorer la compacité de l'installation 9, la ligne génératrice L3 sera contenue dans un plan sensiblement vertical. Le point d'assemblage 15 pourra alors de préférence coïncider avec le point bas de l'âme 3, c'est-à-dire avec la portion de l'âme 3 ayant la plus faible altitude lorsque l'âme 3 est en place sur le support de guidage 11.

Le support planétaire 14 porte de préférence au moins une bobine satellite 16 qui guide le fil de tresse 1, et qui est montée en rotation sur un axe qui est parallèle à l'axe central Z14, mais excentré par rapport à ce dernier.

Ainsi, la composition du mouvement d'avance de l'âme 3 le long de la ligne génératrice L3, procuré par la rotation azimutale autour de l'axe principal Z3, et du mouvement de rotation du dévidoir 12, et plus particulièrement de la bobine satellite 16, autour de l'axe central Z14, et donc autour de la ligne génératrice L3, permet de créer l'enchaînement hélicoïdal des spires 2.

Selon l'invention, le procédé comprend, après l'étape (S1) de tressage, une étape (S2) de pliage au cours de laquelle on déforme plastiquement le tronçon excédentaire 6, ici plus préférentiellement le tronçon excédentaire de sortie 6_out, par pliage, de manière à former un coude 17, ici plus préférentiellement un coude de sortie 17_out, qui fait diverger le tronçon excédentaire 6 par rapport aux spires hélicoïdales 2 et saillir au moins en partie ledit tronçon excédentaire 6 par rapport au volume de tresse V5 du tore tressé 4.

Par « déformation plastique », on entend une déformation irréversible qui résulte de l'application au fil de tresse 1 d'une contrainte qui est supérieure à la limite élastique intrinsèque du matériau constitutif dudit fil de tresse 1. En effet, l'étape (S2) de pliage a pour but de former durablement un coude 17, ce qui implique que la déformation induite pendant l'opération de pliage soit suffisante pour que, après ladite opération de pliage, le fil de tresse 4 du tronçon excédentaire 6 ne revienne pas élastiquement à la position initiale qu'il occupait avant ladite opération de pliage, mais conserve ledit coude 17.

En l'espèce, tant par commodité que par convention usuelle, on pourra considérer que l'on est en présence d'une déformation plastique lorsque le fil de tresse 1 est soumis à une contrainte qui dépasse la limite d'élasticité conventionnelle à 0,2% d'allongement, notée Rp0.2, du matériau constitutif dudit fil de tresse 1. Ladite limite d'élasticité conventionnelle à 0,2% d'allongement Rp0.2 correspond, lors d'un essai de traction, à la contrainte de traction qui laisse subsister un allongement relatif résiduel, dû à une déformation plastique, de 0,2%.

Avantageusement, la plasticité et la rigidité intrinsèques du matériau, de préférence métallique, qui est constitutif du fil de tresse 1, permettront au tronçon excédentaire 6 de conserver de lui-même la forme et la courbure du coude 17, et par conséquent l'orientation de l'extrémité libre dudit tronçon excédentaire 6, telles que cette forme, cette courbure et cette orientation résultent de la déformation plastique, permanente, obtenue par l'opération de pliage. Avantageusement, le tronçon excédentaire 6 ainsi coudé conservera, après l'opération de pliage, un caractère non lâche, qui lui permet de rester sensiblement tendu, dans la configuration saillante recherchée par rapport au volume de tresse V5.

Bien entendu, on pourra prévoir, sans sortir du cadre de l'invention, de former un coude 17 sur le tronçon excédentaire d'entrée 6_in, pour obtenir un coude d'entrée 17_in, et/ou sur le tronçon excédentaire de sortie 6_out, pour obtenir un coude de sortie 17_out.

Par commodité de description, l'expression « coude 17 » pourra donc désigner indifféremment dans ce qui suit, sauf spécification contraire, aussi bien un coude de sortie 17_out qu'un coude d'entrée 17_in.

Avantageusement, la formation du coude 17 et l'agencement saillant du tronçon excédentaire 6 qui en résulte facilitent l'accès ultérieur audit tronçon excédentaire 6, par un outil extérieur au tore tressé 4, ainsi que la manipulation ultérieure dudit tronçon excédentaire 6 et par conséquent la manipulation et le positionnement du tronçon de spire terminale 5_in, 5_out qui est rattaché directement audit tronçon excédentaire 6.

Par ailleurs, le coude 17 peut également, ou alternativement, remplir une fonction de butée d'arrêt, en formant une sorte de crochet qui permet de bloquer le fil de tresse 1 contre les spires hélicoïdales 2, comme c'est de préférence le cas du coude de sortie 17_out, et/ou contre l'âme 3, comme c'est de préférence le cas du coude d'entrée 17_in, et qui empêche ainsi le fil de tresse 1 de se dérouler. De la sorte, on peut préserver la cohésion du tore tressé 4 lors des étapes (S1) de tressage et (S2) de pliage, et après ces dernières.

A ce titre, on préfèrera, par commodité de réalisation, conférer directement audit coude d'entrée 17_in sa forme définitive, c'est-à-dire son angle définitif, avant de procéder à l'étape (S1) de tressage et à l'enroulement des spires hélicoïdales 2, de sorte à pouvoir utiliser le coude d'entrée 17_in comme un crochet qui retient le fil de tresse 1 contre l'âme 3 au début de l'opération de tressage. Cette solution permet en outre avantageusement d'éviter que le tronçon excédentaire d'entrée 6_in ne fasse obstacle au mouvement du dévidoir 12.

Ceci étant, il n'est pas exclu, selon une possible variante d'exécution, que l'on puisse former ou accentuer un coude d'entrée 17_in après l'opération de tressage, conformément à l'étape (S2) de pliage susmentionnée, notamment pour réorienter selon les besoins le tronçon excédentaire d'entrée 6_in, postérieurement à l'étape (S1) de tressage.

Le coude de sortie 17_out sera quant à lui de préférence formé après l'étape (S1) de tressage, conformément à l'étape (S2) de pliage susmentionnée.

De surcroît, on notera que le coude 17 peut également offrir intrinsèquement, du fait de sa forme convexe, une prise à un outil de préhension, tel qu'une palette 31, 32 d'enfoncement qui sera destinée à repousser élastiquement le tronçon excédentaire 6 correspondant à l'encontre du tore tressé 4 pour en exposer un tronçon de spire terminale 5_in, 5_out en vue d'une opération de coupe et éventuellement de jonction, tel que cela sera détaillé plus bas.

Le ou les coudes 17, 17_in, 17_out, et plus particulièrement le coude de sortie 17_out qui est réalisé après l'opération de tressage et donc postérieurement à la formation du tronçon d'enroulement 5, permettent de conférer au tronçon excédentaire 6, 6_in, 6_out concerné une orientation distincte de l'orientation qui correspond à l'enroulement (de préférence régulier) des spires hélicoïdales 2, de manière à créer, ou plus préférentiellement de manière à accentuer (notamment dans le cas du tronçon excédentaire de sortie 6_out), une divergence entre l'orientation du tronçon excédentaire 6 et l'orientation globale des spires 2 et du tronçon d'enroulement 5.

En outre, le tronçon excédentaire 6 est choisi suffisamment long, tel que cela a été décrit plus haut, pour que l'orientation qui lui est conférée par le coude 17 permette audit tronçon excédentaire 6 de s'étendre au-delà du volume V5, sensiblement torique, qu'occupent l'ensemble des spires hélicoïdales 2 formant le tronçon d'enroulement 5.

Cette conformation saillante facilite en effet la détection ultérieure du tronçon excédentaire 6, et l'engagement d'un outil en prise avec ledit tronçon excédentaire 6.

Pour réaliser l'étape (S2) de pliage, l'installation 9 comprend un outil de pliage 20, qui est distinct du dévidoir 12, et qui est agencé pour venir récupérer, après l'opération de tressage, le tronçon excédentaire 6, ici plus préférentiellement le tronçon excédentaire de sortie 6_out, et réaliser un pliage plastique dudit tronçon excédentaire 6 de manière à former un coude 17 qui fait diverger le tronçon excédentaire 6 par rapport aux spires hélicoïdales 2 et saillir au moins en partie ledit tronçon excédentaire 6 par rapport au volume de tresse V5 du tore tressé 4.

De préférence, ledit outil de pliage 20 est automatique, de manière à ce que le coude 17, et en particulier, de préférence, le coude de sortie 17_out, soit mis en forme automatiquement, à l'issue de l'opération de tressage, ce qui permet d'accélérer la cadence de production des tringles.

De préférence, l'outil de pliage 20 comprend une enclume 21, escamotable, qui est mobile entre d'une part une première position, dite « position reculée », qu'elle occupe pendant l'opération de tressage et dans laquelle ladite enclume 21 est suffisamment éloignée de la ligne génératrice L3 pour ne pas interférer avec l'opération de tressage ni le tore tressé 4 en cours de réalisation, et d'autre part une seconde position, dite « position avancée », que ladite enclume 21 adopte pour l'opération de pliage, et dans laquelle ladite enclume 21 est plus proche du tore tressé 4 que dans la première position, et de préférence dans laquelle ladite enclume 21 est appuyée contre ledit tore tressé 4, tel que cela est illustré sur les figures 4, 6 et 7.

En effet, de préférence, lors de l'étape (S2) de pliage, on approche une enclume 21 du tore tressé 4, et plus préférentiellement on applique une enclume 21 contre ledit tore tressé 4, et l'on déforme plastiquement le tronçon excédentaire 6, ici de préférence le tronçon excédentaire de sortie 6_out, par pliage à l'encontre de ladite enclume 21, de manière à former le coude 17, ici de préférence un coude de sortie 17_out.

L'utilisation d'une enclume 21 contribue à stabiliser le tore tressé 4 lors de l'opération de pliage, et procure avantageusement une excellente reproductibilité du procédé, en évitant une dispersion du point de pliage, c'est-à-dire une dispersion de la position du coude 17 d'un tore tressé 4 à l'autre.

L'enclume 21 peut par exemple prendre la forme, tel que cela est illustré sur la figure 6, d'une tige coudée, en matériau rigide, dont au moins une branche s'étend selon une direction sensiblement parallèle à l'axe principal Z3 et est destinée à venir, en position avancée, à proximité du tronçon excédentaire 6, et de préférence au contact du tronçon excédentaire 6, par exemple en limite du volume de tresse V5 et plus particulièrement en limite radiale externe du tronçon d'enroulement 5, pour offrir un appui résistant à l'encontre duquel on pourra fléchir le tronçon excédentaire 6, au-delà de sa limite d'élasticité, pour former le coude 17.

Afin de ne pas endommager le fil de tresse 1 formant le tronçon d'enroulement 5, tout en facilitant l'effet de pliage, la section de l'enclume 21 présentera de préférence une forme arrondie, par exemple circulaire.

De préférence, le diamètre de cette forme arrondie de la section de l'enclume 21 pourra être compris entre 2 mm et 10 mm, et plus préférentiellement entre 6 mm et 8 mm, ce qui permet notamment de garantir une rigidité suffisante à ladite enclume 21.

Par simplicité de mise en œuvre, le mouvement d'enclume 21_mov entre la position reculée et la position avancée (ou réciproquement, de la position avancée à la position reculée) pourra s'effectuer en translation, par exemple au moyen d'un organe motorisé linéaire 22, tel qu'un vérin 22, portant la tige de l'enclume 21.

Ledit mouvement d'enclume 21_mov pourra être orienté selon une direction transverse, et par exemple radiale, par rapport à l'axe principal Z3, afin de permettre un accès puis un dégagement facile de l'enclume 21, de préférence par l'extérieur radial du tore tressé 4.

Bien entendu, on pourrait, en variante, approcher l'enclume 21 du tore tressé 4 par un mouvement d'enclume 21_mov d'autre nature appropriée, par exemple par un mouvement de basculement.

Par ailleurs, de préférence, lors de l'étape (S2) de pliage, on actionne un poinçon 23 mobile, pour récupérer le tronçon excédentaire 6 et réaliser, de préférence à l'encontre d'une enclume 21, telle que mentionnée plus haut, le pliage plastique dudit tronçon excédentaire 6.

On pourrait, selon une variante de mise en œuvre, envisager d'utiliser un poinçon 23 seul, c'est-à-dire sans enclume 21, afin d'effectuer l'opération de pliage à l'encontre de la résistance mécanique opposée par le tore tressé 4 lui-même, alors que ledit tore tressé 4 serait maintenu en position fixe au sein du support de guidage 11.

Toutefois, de façon préférentielle, afin de garantir l'intégrité du tore tressé 4 ainsi que la reproductibilité et la précision de l'opération de pliage, on préférera associer, en combinaison, un poinçon 23 et une enclume 21.

Ainsi, de préférence, l'outil de pliage 20 pourra comprendre un poinçon 23, et, plus particulièrement, un poinçon 23 qui est mobile relativement à l'enclume 21 et agencé pour venir récupérer le tronçon excédentaire 6 et rabattre ledit tronçon excédentaire 6 à l'encontre de ladite enclume 21 pour causer la déformation plastique qui est nécessaire à la formation du coude 17.

La position de l'enclume 21, et le mouvement 23_mov du poinçon 23 relativement à ladite enclume 21 seront bien entendus réglés et contrôlés de manière à obtenir la position souhaitée du coude 17 et l'amplitude de pliage requise au regard de l'angle de coude A17 que l'on souhaite obtenir.

A ce titre, pour tenir compte du retour élastique du fil de tresse 1 après le relâchement de l'effort de pliage exercé par le poinçon 23 et/ou l'enclume 21, on prévoira de préférence une amplitude de mouvement qui va au-delà dudit angle de coude A17 résiduel que l'on souhaite obtenir.

De préférence, le poinçon 23 sera animé d'un mouvement de poinçon 23_mov basculant, autour d'un axe de pivot Z23, entre d'une part une première position P23_1 dite « position d'attente », ici une position basse sur l'installation des figures 6, 7 et 8, dans laquelle le poinçon 23 se trouve en retrait du tore tressé 4 et du tronçon excédentaire 6, et d'autre part une seconde position P23_2, dite « position de fin de pliage », ici une position haute sur les figures 6 à 8, dans laquelle le poinçon 23 achève le déplacement du tronçon excédentaire 6 nécessaire à la formation plastique du coude 17.

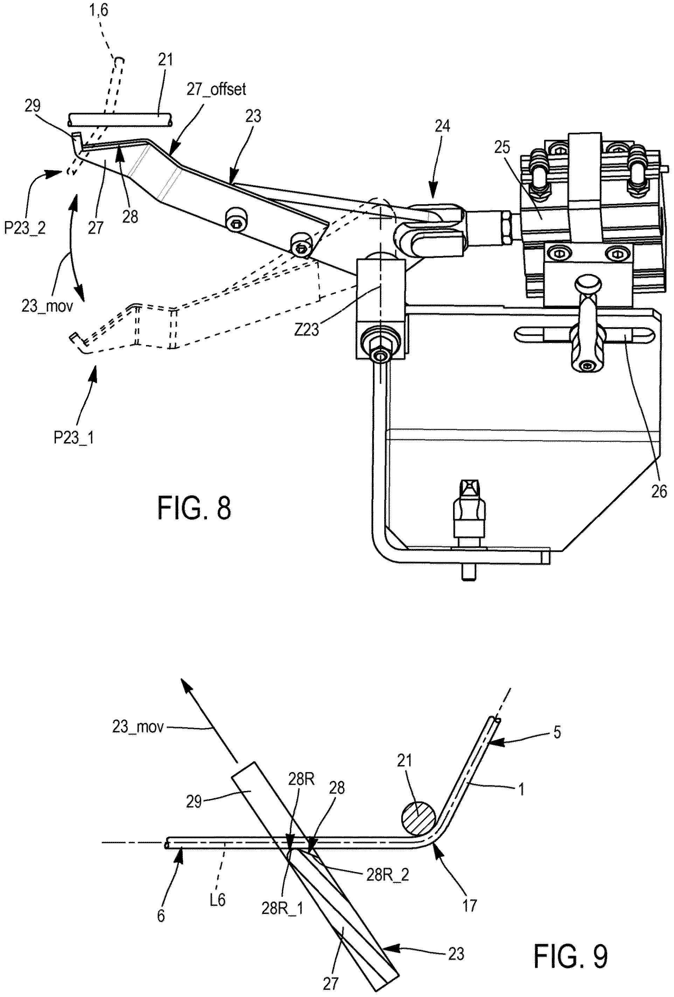

Le mouvement de poinçon 23_mov peut être contrôlé par tout système motorisé approprié, par exemple un système comprenant un embiellage 24 couplé à un moteur 25 tel qu'un vérin 25, tel que cela est illustré sur la figure 8.

On pourra également prévoir un organe de réglage des limites de fin de course du poinçon 23, par exemple au moyen d'une rainure d'ajustement oblongue 26 qui permet de choisir la position du vérin 25 dans une plage prédéterminée.

De préférence, tel que cela est illustré sur les figures 8 et 9, le poinçon 23 présente une lame de crochetage 27 qui comprend un tranchant d'appui 28, qui est destiné à venir appuyer sur le tronçon excédentaire 6 selon une direction transverse à la direction longitudinale d'extension L6 dudit tronçon excédentaire 6. Tel que cela est illustré sur la figure 9, ladite direction transverse à la direction longitudinale d'extension L6 du tronçon excédentaire correspondra de préférence à la direction du mouvement du poinçon 23_mov.

De préférence, le tranchant d'appui 28 est émoussé selon un profil arrondi convexe 28R.

Ceci permet avantageusement de ne pas blesser le fil de tresse 1 lors de l'étape de pliage, et d'éviter en particulier d'arracher le revêtement dudit fil de tresse.

De la sorte, on évite de créer une zone d'amorce de corrosion, dans laquelle la rouille pourrait se développer et s'étendre le long du fil de tresse 1, en cas de stockage prolongé du tore tressé 4 (tel que cela peut être le cas si l'on stocke le tore tressé 4 dans un espace de stockage tampon, en attendant de procéder ultérieurement à des opérations de coupe puis de jonction par manchonnage), jusqu'à gagner le tronçon d'enroulement 5 et contaminer ainsi la tringle.

De même, en évitant de blesser le fil de tresse 1, on évite de générer des poussières (du fil de tresse 1 et/ou du revêtement de celui-ci) qui pourraient occasionner une pollution de l'installation 9 et de son environnement.

Le profil arrondi convexe 28R pourra par exemple comporter, tel que cela est visible sur la vue en coupe de la figure 9, un sommet arrondi 28R_1, qui atteint le tronçon excédentaire 6 en premier, puis un flan en biseau 28R_2, de type méplat, de préférence incliné par rapport à la direction du mouvement de poinçon 23_mov, et contre lequel le tronçon excédentaire 6 du fil de tresse 1 pourra avantageusement venir se coucher progressivement, au fur et à mesure que s'opère le pliage plastique du coude 17.

Eventuellement, selon le réglage de course choisi, lorsque le poinçon 23 atteint sa seconde position P23_2 en fin de pliage, la direction longitudinale L6 du tronçon excédentaire 6 fléchi pourra se retrouver quasiment parallèle au méplat du flan en biseau 28R_2.

A titre préférentiel, le rayon de courbure du sommet arrondi 28R_1 pourra être compris entre 0,5 mm et 3 mm, et par exemple égal à 1 mm.

Le flan en biseau 28R_2, de préférence rectiligne, pourra quant à lui présenter de préférence une inclinaison comprise entre 20 degrés et 45 degrés, et par exemple égale à 30 degrés, par rapport à la direction du mouvement de poinçon 23_mov.

Le profil doux du tranchant 28 permet avantageusement au poinçon 23 d'aborder le tronçon excédentaire 6 en premier par le sommet arrondi 28R_1 du tranchant 28, puis au tronçon excédentaire 6 de rouler et glisser sans heurt le long du profil arrondi convexe 28R, pour s'adapter à l'orientation que confère peu à peu audit tronçon excédentaire 6 le pliage du coude 17.

Par ailleurs, la lame de crochetage 27 du poinçon 23 peut comprendre, quelle que soit la forme du tranchant d'appui 28, et de préférence en combinaison avec un tranchant d'appui 28 émoussé selon un profil convexe arrondi 28R tel que décrit plus haut, au moins une butée latérale 29, de préférence formée par un épaulement 29, qui est agencée en saillie du tranchant d'appui 28 de sorte à pouvoir stopper un glissement latéral du tronçon excédentaire 6 le long du tranchant d'appui 28 au cours du mouvement du poinçon 23_mov qui est nécessaire à la récupération et au pliage dudit tronçon excédentaire 6.

Avantageusement, un tel agencement de butée 29 permet au poinçon 23 d'attraper le tronçon excédentaire 6 à la volée, en effectuant un passage rasant le long du tore tressé 4, et plus particulièrement en effectuant un passage au ras du tronçon d'enroulement 5, de préférence selon une direction sensiblement tangente à la ligne génératrice L3, et de ne pas échapper ledit tronçon excédentaire 6 lors de la poursuite du mouvement de poinçon 23_mov et de la déformation dudit tronçon excédentaire 6 par pliage.

On assure ainsi un excellent contrôle du processus de pliage.

On notera que pour favoriser un passage du poinçon 23 au ras du tronçon d'enroulement 5 du tore tressé 4 sans risque d'interférence avec ledit tronçon d'enroulement 5, on pourra également prévoir sur la lame de crochetage 27, tel que cela est visible sur la figure 8, un déport de lame 27_offset dirigé vers la position du tore tressé 4, par exemple réalisé par un pliage en « S » ou en « Z » de ladite lame de crochetage 27.

Par ailleurs, de préférence, lors de l'étape (S1) de tressage, le fil de tresse 1 qui s'enroule autour de la ligne génératrice L3 est dévidé depuis un dévidoir 12 contenant une réserve de fil de tresse, et, préalablement à l'étape (S2) de pliage, on libère le fil de tresse 1 du dévidoir 12, en un point du fil de tresse 1 qui est choisi pour devenir une extrémité libre du tronçon excédentaire 6, ici une extrémité du tronçon excédentaire de sortie 6_out, puis, lors de l'étape (S2) de pliage, on réalise le coude 17, 17_out de manière à positionner ladite extrémité libre du tronçon excédentaire 6, 6_out en saillie par rapport au volume de tresse V5 du tore tressé 4, tel que cela est notamment illustré sur les figures 1 à 4.

Avantageusement, en libérant le fil de tresse 1, et plus particulièrement le tronçon excédentaire 6, 6_out, en vue de l'opération de pliage, on facilite ladite opération de pliage.

En particulier, cette libération permet au besoin d'orienter librement le tore tressé 4 en azimut autour de l'axe principal Z3, et ainsi de positionner convenablement le tronçon excédentaire 6, 6_out par rapport à l'enclume 21 et/ou par rapport à la trajectoire du mouvement de poinçon 23_mov, sans que le tore tressé 4 soit captif du dévidoir 12, et sans qu'il soit nécessaire d'ajuster, pour accompagner un mouvement d'orientation du tore tressé 4, la quantité de fil de tresse libérée par le dévidoir 12.

On évite ainsi toute gêne au positionnement du tore tressé 4, et toute consommation inutile de fil de tresse 1.

On notera que l'on peut envisager plusieurs possibilités pour libérer le fil de tresse 1 à la fin de l'opération de tressage :
- selon une première possibilité, on pourra prévoir, avant l'opération de tressage, un dévidoir 12 qui dispose d'une réserve de fil de tresse 1 supérieure à la quantité de fil de tresse 1 nécessaire à l'opération de tressage, en l'espèce qui contient une longueur de fil de tresse 1 supérieure, de préférence plusieurs fois supérieure, à la longueur cumulée du tronçon d'enroulement 5 et des tronçons excédentaires 6, 6_in, 6_out adjacents ; dans ce cas, on pourra libérer le fil de tresse 1 en coupant ledit fil de tresse 1, après l'opération de tressage, en un point du fil de tresse 1 qui est choisi pour devenir une extrémité libre du tronçon excédentaire 6 ; de la sorte, à l'issue de l'étape (S1) de tressage, on aura détaché le fil de tresse 1 qui est présent sur le tore tressé 4 de la réserve de fil de tresse 1 qui est (encore) présente sur le dévidoir 12 ;
- selon une seconde possibilité, particulièrement simple à mettre en œuvre et que l'on pourra préférer à la première possibilité, on prévoira d'embarquer sur le dévidoir 12, avant l'étape (S1) de tressage, et plus particulièrement avant chaque étape (S1) de tressage, la quantité de fil de tresse 1 juste nécessaire et suffisante pour procéder à l'opération de tressage considérée, c'est-à-dire ici de préférence une longueur totale de fil de tresse 1 qui correspond au cumul de la longueur de fil de tresse 1 nécessaire à la formation du tronçon d'enroulement 5 et de la longueur de fil de tresse 1 nécessaire à la formation du ou des tronçons excédentaires 6, 6_in, 6_out qui sont adjacents audit tronçon d'enroulement 5 ; dans ce cas, la libération du fil de tresse 1 surviendra automatiquement, par largage de l'extrémité libre dudit fil de tresse 1, sans requérir de coupe, dès lors que ledit fil de tresse 1 aura été dévidé en totalité du dévidoir 12, pour être entièrement consommé par l'opération de tressage.

De préférence, le coude 17, 17_in, 17_out, et plus préférentiellement au moins le coude de sortie 17_out, forme un angle, dit « angle de coude » A17, A17_in, A17_out, qui est compris entre 45 degrés et 160 degrés, et de préférence entre 60 degrés et 135 degrés.

On peut ainsi avantageusement faire saillir le tronçon excédentaire 6 selon un angle dit « angle de divergence » A6, par rapport à la tangente à la ligne génératrice L3, qui rend très accessible ledit tronçon excédentaire 6.

A titre indicatif, l'angle de coude d'entrée A17_in pourra être sensiblement égal à 90 degrés, par exemple compris entre 85 degrés et 100 degrés.

Une telle valeur facilitera notamment le crochetage de l'âme 3 en début de tressage, tout en évitant au tronçon excédentaire d'entrée 6_in de gêner l'opération de tressage.

L'angle de coude de sortie A17_out pourra être similaire à, ou de préférence différent de, l'angle de coude d'entrée A17_in.

A titre indicatif, l'angle de coude de sortie A17_out pourra être sensiblement égal à 120 degrés, et par exemple compris entre 115 degrés et 135 degrés.

Un tel angle de coude de sortie A17_in sera en effet facile à réaliser au moyen d'outils de pliage 20 extérieurs au tore tressé 4, tout en offrant une bonne prise pour des manipulations ultérieures du fil de tresse 1.

De préférence, selon une caractéristique préférentielle qui peut constituer une invention à part entière, et le cas échéant quelle que soit la valeur d'angle de coude A17 à prévoir pour y parvenir, l'angle de divergence A6 susmentionné est compris entre 30 degrés et 90 degrés.

Dans le cas plus spécifique du tronçon excédentaire de sortie 6_out, l'angle de divergence A6 sera de préférence compris entre 30 degrés et 60 degrés, et par exemple sensiblement égal à 45 degrés.

Avantageusement, les plages préférées d'angles susmentionnées permettent au coude 17 de présenter une ouverture angulaire idéale pour offrir une prise à un outil de manipulation, notamment un poussoir 30 de type palette 31, 32, tel que cela sera détaillé plus bas.

Ces plages d'angles sont également compatibles avec une fonction stabilisatrice du ou des coudes 17, qui empêche un déroulement inopiné du fil de tresse 1 constitutif du tronçon d'enroulement 5.

Les valeurs d'angles A17, A17_in, A17_out, A6 susmentionnées s'entendent bien entendu des angles résiduels tels qu'ils subsistent après l'étape (S2) de pliage, c'est-à-dire après relâchement de la contrainte de pliage exercée par le poinçon 23 et/ou l'enclume 21, et donc après retour élastique post-pliage.

On notera en outre que l'opération de pliage permet de préférence d'obtenir chaque coude 17 en réalisant un pli unique dans le tronçon excédentaire 6 concerné, pli unique qui, du fait de la rigidité du fil de tresse 1, se maintient naturellement ouvert selon la configuration, et plus particulièrement selon l'angle de coude A17, qui est défini par le degré de déformation plastique choisi. De fait, il n'est avantageusement pas nécessaire, par exemple, de prévoir un quelconque moyen tiers, du genre torsade ou nœud, pour étayer le coude 17 ou bloquer le tronçon excédentaire 6 dans la configuration voulue.

Par ailleurs, le rayon de courbure du coude 17, considéré à l'intérieur dudit coude 17, sera de préférence inférieur ou égal à 5 mm, par exemple compris entre 1 mm et 3 mm.

Le coude 17 pourra ainsi former une cassure nette dans le tronçon excédentaire 6, et, en particulier, offrir une meilleure prise, non glissante, à un outil de manipulation du genre poussoir.

De préférence, l'étape (S2) de pliage a pour effet d'augmenter la distance qui sépare radialement le tronçon excédentaire 6 de l'axe principal Z3.

Plus préférentiellement, si l'on considère que le volume de tresse V5 est contenu radialement à l'intérieur d'une limite radiale, dite « limite radiale externe » RL_ext, par rapport à l'axe principal Z3, alors le coude 17 est de préférence agencé pour maintenir le tronçon excédentaire 6 au moins en partie en saillie au-delà de ladite limite radiale externe RL_ext du volume de tresse V5.

La limite radiale externe RL_ext pourra de préférence correspondre à un cylindre fictif, de préférence de base circulaire, centré sur l'axe principal Z3, coaxial à l'anneau formé par la ligne génératrice L3, tangent extérieurement au tronçon d'enroulement 5, et dans lequel s'inscrit donc le volume de tresse V5.

La région de l'espace située au-delà de ladite limite radiale externe RL_ext sera désignée par commodité de description comme étant « l'extérieur » EXT du tore tressé 4.

Avantageusement, le choix de réaliser un pliage "centrifuge", qui dirige le tronçon excédentaire 6 en éloignement de l'axe principal Z3, et plus préférentiellement le choix de réaliser un pliage qui amène le tronçon excédentaire 6 radialement au-delà du volume de tresse V5, permet de réaliser facilement depuis l'extérieur EXT du tore tressé 4 les mouvements de poinçon 23_mov et/ou d'enclume 21_mov qui sont nécessaires au pliage.

On peut ainsi disposer l'outil de pliage 20, potentiellement relativement encombrant, dans l'espace libre situé radialement au-delà de la limite radiale externe RL_ext du tronçon d'enroulement 5, ce qui simplifie l'agencement et le fonctionnement de l'installation 9.

Avantageusement, le déport de l'outil de pliage 20 au-delà du tore tressé 4 permet de réserver aux outils qui sont nécessaires au tressage l'espace, dit « espace intérieur » INT, contenu radialement à l'intérieur dudit tore tressé 4, c'est-à-dire contenu radialement en-deçà d'une limite radiale interne RL_int du volume tressé V5.

De manière analogue à la limite radiale externe RL_ext, on pourra de préférence définir la limite radiale interne RL_int comme un cylindre fictif qui est centré sur l'axe principal Z3, coaxial à l'anneau formé par la ligne génératrice L3, mais tangent intérieurement (et non extérieurement) au tronçon d'enroulement 5, et qui s'inscrit donc à l'intérieur de l'espace délimité radialement par le volume de tresse V5.

En particulier, on pourra ainsi réserver cet espace intérieur INT au support de guidage 11 qui entraîne l'âme 3 en rotation azimutale, et au mouvement du dévidoir 12 qui génère l'enroulement hélicoïdal des spires 2, pendant l'opération de tressage.

De surcroît, en pliant le tronçon excédentaire 6 vers l'extérieur du tore tressé 4, on crée un coude 17 qui, vu depuis l'extérieur EXT du tore tressé 4, présente une forme concave, ouverte sur l'extérieur EXT du tore tressé 4, et qui favorise donc un engagement et une manipulation ultérieures du tronçon excédentaire 6 et du tronçon de spire extrémale 5_in, 5_out qui est rattaché à ce dernier.

Ici encore, le choix d'une disposition concave, ouverte sur l'espace extérieur EXT, permet notamment d'implanter les outils nécessaires à une telle manipulation à l'extérieur EXT du tore tressé 4, dans un espace disponible et accessible, ce qui simplifie la conception, le réglage, le fonctionnement et l'entretien de l'installation 9.

Par ailleurs, selon une caractéristique préférentielle qui peut constituer une invention à part entière, applicable notamment à tout tore tressé 4 pourvu d'au moins un, et de préférence de deux, tronçons excédentaires 6 convenablement conformés, le procédé peut comprendre, suite à l'étape (S2) de pliage, une étape d'enfoncement (S3), au cours de laquelle on vient en prise contre une partie du tronçon excédentaire 6 considéré afin d'exercer sur ladite partie du tronçon excédentaire 6 une poussée d'enfoncement F_S3 qui est dirigée à l'encontre du coude 17 correspondant et donc à l'encontre d'une portion d'extrémité du tronçon d'enroulement 5 qui se rattache audit coude 17, dite « tronçon de spire terminale » 5_in, 5_out, de telle manière que l'on décolle ledit tronçon de spire terminale 5_in, 5_out des autres spires 2, par flexion élastique du fil de tresse 1, tel que cela est illustré sur la figure 5B.

Avantageusement, le fait de décoller localement et provisoirement une portion d'extrémité 5_in, 5_out du tronçon d'enroulement 5 du reste dudit tronçon d'enroulement 5 permet de rendre accessible le fil de tresse 1 qui se trouve dans cette portion d'extrémité du tronçon d'enroulement 5, en vue d'effectuer d'autres opérations au niveau de cette portion d'extrémité, notamment des opérations de coupe et de jonction par manchonnage.

Avantageusement, en utilisant la flexibilité élastique du fil de tresse 1, et plus exactement la flexibilité structurelle des spires terminales du tronçon d'enroulement 5, qui se comportent sensiblement comme des ressorts, notamment du fait qu'elles suivent globalement la courbure générale de la ligne génératrice L3, ce décollement est réversible, ce qui permet aux tronçons de spires terminales 5_in, 5_out qui subsistent après les opérations de coupe et de manchonnage susmentionnées de réintégrer le volume de tresse V5 après lesdites opérations. De la sorte, l'opération d'enfoncement n'altère pas la structure du tore tressé 4 qui sera utilisé définitivement dans la tringle.

La poussée d'enfoncement F_S3 sera de préférence orientée sensiblement dans la direction du creux du coude 17, et par conséquent dans une direction sensiblement opposée à la direction dans laquelle on a procédé au pliage du tronçon excédentaire 6.

De façon particulièrement préférentielle, la poussée d'enfoncement F_S3 sera dirigée vers l'intérieur INT du tore tressé 4, et, par exemple, sera dirigée de façon sensiblement centripète, et notamment de façon radiale centripète, par rapport à l'axe principal Z3.

En tout état de cause, l'orientation et la direction de la poussée d'enfoncement F_S3 seront choisies de manière à ce que ladite poussée d'enfoncement F_S3 tende en quelque sorte à dérouler partiellement les portions de spires terminales 5_in, 5_out du tronçon d'enroulement 5, de sorte à obtenir le décollement souhaité.

Plus préférentiellement, l'étape (S3) d'enfoncement permettra de faire saillir le coude 17 radialement à l'intérieur INT du tore tressé 4, c'est-à-dire permettra d'amener le coude 17 à une distance de l'axe principal Z3 qui est plus faible que le rayon de la limite radiale interne RL_int correspondante, tel que cela est illustré sur la figure 5B.

On pourra ainsi procéder aux opérations de coupe et de manchonnage depuis l'intérieur INT du tore tressé 4, tandis que la poussée d'enfoncement F_S3 est maintenue par un outil agissant depuis l'extérieur EXT de ce même tore tressé 4.

Bien entendu, pour mettre en œuvre l'étape (S3) d'enfoncement, l'installation 9 comprendra un outil d'enfoncement 30, 31, 32 adapté.

A ce titre, l'installation 9 comporte de préférence un poussoir 30 qui est agencé pour venir exercer, sur une partie du tronçon excédentaire 6, une poussée d'enfoncement F_S3 qui est dirigée à l'encontre à la fois du coude 17 et d'une portion d'extrémité du tronçon d'enroulement qui se rattache audit coude 17, dite « tronçon de spire terminale » 5_in, 5_out, de sorte à pouvoir décoller ledit tronçon de spire terminale 5_in, 5_out des autres spires 2, par flexion élastique du fil de tresse 1.

Selon une possibilité de mise en œuvre, le poussoir 30 pourra comprendre une palette 31, 32 qui vient engager le tronçon excédentaire 6, et plus préférentiellement le creux du coude 17.

De préférence, ladite palette 31, 32 peut se glisser à cet effet dans un interstice axialement compris, en référence à l'axe principal Z3, entre d'une part la branche libre du tronçon excédentaire 6 qui est reliée au coude 17 et d'autre part la face, inférieure ou supérieure, du tore tressé 4, perpendiculaire audit axe principal Z3, qui est la plus proche de ladite branche libre du tronçon excédentaire 6, tel que cela est illustré sur la figure 5B.

Par convention de description, on peut en effet considérer que le tore tressé 4 s'étend axialement, le long de l'axe principal, entre d'une part une première face dite « face inférieure », qui correspond à l'intersection du tronçon d'enroulement 5 avec un plan fictif perpendiculaire à l'axe principal Z3 et qui vient axialement en appui tangent contre le tronçon d'enroulement 5 d'un premier côté du tore tressé 4, et d'autre part une seconde face, dite « face supérieure », qui correspond à l'intersection du tronçon d'enroulement 5 avec un second plan fictif perpendiculaire à l'axe principal Z3 et qui vient axialement en appui tangent contre le tronçon d'enroulement 5 d'un second côté du tore tressé 4, opposé axialement au premier côté.

Dans le cas où le tore tressé 4 comprend d'une part un coude d'entrée 17_in, associé à une branche libre de tronçon excédentaire d'entrée 6_in, et d'autre part un coude de sortie 17_out, associé à une branche libre de tronçon excédentaire de sortie 6_out, le poussoir 30 peut avantageusement comprendre une première palette 31 et une seconde palette 32 qui agissent conjointement, chacune à l'encontre de l'un des coudes 17_in, 17_out, de manière à, selon une caractéristique préférentielle qui peut du reste constituer une invention à part entière quelle que soit la forme du poussoir 30, décoller simultanément le premier tronçon de spire terminale 5_in et le second tronçon de spire terminale 5_out.

Plus spécifiquement, si le coude d'entrée 17_in et le coude de sortie 17_out, respectivement le tronçon excédentaire d'entrée 6_in et le tronçon excédentaire de sortie 6_out associés, s'étendent chacun en vis-à-vis d'une face différente du tore tressé 4, par exemple si le tronçon excédentaire d'entrée 6_in passe du côté de la face inférieure du tore tressé 4 tandis que le tronçon excédentaire de sortie 6_out passe du côté de la face supérieure, tel que cela est illustré sur la figure 5B, alors la première palette 31 pourra se glisser en-dessous du tore tressé 4, le long de la face inférieure, pour repousser le tronçon excédentaire d'entrée 6_in, tandis que la seconde palette 32 pourra se glisser au-dessus du tore tressé 4, le long de la face supérieure pour repousser le tronçon excédentaire de sortie 6_out.

Bien entendu, on pourrait inverser, sans sortir du cadre de l'invention, l'ordre susmentionné d'agencement inférieur/supérieur des coudes 17_in, 17_out et des palettes 31, 32 correspondantes.

On notera par ailleurs que les deux tronçons excédentaires 6_in, 6_out sont de préférence agencés de manière à ce que, selon une caractéristique préférentielle qui peut constituer une invention à part entière, leurs tronçons de spires terminales 5_in, 5_out respectifs se croisent, lorsqu'ils sont soumis chacun à une poussée d'enfoncement F_S3, en un point de croisement 33, avantageusement décalé hors du volume de tresse V5. Ici, ledit point de croisement 33 est plus particulièrement décalé hors du volume de tresse V5 selon une direction sensiblement radiale centripète, de manière à être situé à l'intérieur INT du tore tressé 4.

En pratique, ledit point de croisement 33 correspond de préférence sensiblement, le long du fil de tresse 1, à l'emplacement futur d'une jonction de tresse 45 qui permettra de réunir l'un à l'autre le tronçon de spire terminale d'entrée 5_in et le tronçon de spire terminale de sortie 5_out pour fermer durablement le fil de tresse 1 sur lui-même.

De préférence, le procédé comprend, alors que le tronçon de spire terminale 5_in, 5_out est maintenu décollé des autres spires 2 par flexion élastique conformément à l'étape (S3) d'enfoncement, une étape (S4) de coupe au cours de laquelle on sectionne le fil de tresse 1 au niveau du tronçon de spire terminale 5_in, 5_out, de sorte à éliminer le coude 17 et le tronçon excédentaire 6 correspondants.

Plus particulièrement, on pourra sectionner le fil de tresse 1, au voisinage du point de croisement 33, d'une part au niveau du tronçon de spire terminale d'entrée 5_in, de sorte à éliminer le coude d'entrée 17_in et le tronçon excédentaire d'entrée 6_in, et d'autre part au niveau du tronçon de spire terminale de sortie 5_out, de sorte à éliminer le coude de sortie 17_out et le tronçon excédentaire de sortie 6_out.

Avantageusement, on peut ainsi ajuster très précisément la longueur résiduelle des tronçons de spires terminales 5_in, 5_out, de manière à conserver une longueur juste nécessaire et suffisante pour permettre de réaliser ensuite une jonction de tresse 45 entre lesdits tronçons de spires terminales 5_in, 5_out, tel que cela est illustré sur la figure 5C, afin de fermer définitivement le fil de tresse 1 sur lui-même, dans une conformation adaptée à la tringle.

En outre, l'étape (S4) de coupe peut ainsi avantageusement intervenir au dernier moment, juste avant la réalisation d'une jonction de tresse 45.

Ceci permet d'avoir, au niveau du fil de tresse 1, des surfaces de jonction propres, et en particulier exemptes de corrosion.

Ceci permet en outre de profiter de ce que les extrémités libres du fil de tresse 1 à réunir sont encore décollées à distance du tronçon d'enroulement 5 pour procéder facilement à une jonction entre ces extrémités. *A contrario,* il serait en effet difficile de saisir de nouveau lesdites extrémités si on les laissait revenir élastiquement à leur place au sein du tronçon d'enroulement 5 avant d'avoir procédé à leur jonction.

Bien entendu, l'installation 9 comprend de préférence un outil de coupe 40 qui est agencé pour pouvoir sectionner le fil de tresse 1 au niveau du tronçon de spire terminale 5_in, 5_out considéré, tandis que ledit tronçon de spire terminale 5_in, 5_out est décollé des autres spires 2, de sorte à pouvoir éliminer le coude 17 et le tronçon excédentaire 6 correspondants.

En outre, l'installation 9 comprendra de préférence également un outil de jonction agencé pour réaliser ensuite une jonction de tresse 45 entre les tronçons de spires terminales 5_in, 5_out préalablement ajustés par l'étape (S4) de coupe.

De préférence, la jonction de tresse 45 sera réalisée au moyen d'un manchon 46 qui sera serti sur lesdits tronçons de spires terminales 5_in, 5_out. L'outil de jonction (non représenté ici) pourra alors prendre la forme d'une pince de sertissage.

Ainsi, le procédé comprendra donc de préférence une étape (S5) de jonction, au cours de laquelle on lie l'un à l'autre le tronçon de spire terminale d'entrée 5_in et le tronçon de spire terminale de sortie 5_out au moyen d'un élément de jonction 46, tel que par exemple un manchon 46 que l'on vient sertir sur lesdits tronçons de spires terminales 5_in, 5_out.

Comme indiqué plus haut, l'étape (S5) de jonction intervient de préférence tandis que les tronçons de spires terminales d'entrée 5_in et de sortie 5_out sont toujours maintenus en flexion, décollés du reste des spires hélicoïdales 5, par la poussée d'enfoncement F_S3, ici préférentiellement vers l'intérieur INT du tore tressé 4.

En conservant une poussée d'enfoncement F_S3 pendant les étapes (S4) de coupe puis (S5) de jonction, de sorte à ne pas relâcher le tronçon de spire terminale d'entrée 5_in et le tronçon de spire terminale de sortie 5_out, on peut avantageusement effectuer efficacement, et sans faire courir de risque au fil de tresse 1, et plus globalement sans risquer d'endommager le tore tressé 4 et donc la future tringle, toutes les opérations de coupe et de jonction utiles.

Selon une variante du procédé qui sera particulièrement préférée, notamment en raison de sa simplicité et de sa rapidité d'exécution, on pourra réaliser un coude d'entrée 17_in avant le tressage, et un coude de sortie 17_out après le tressage.

Un tel procédé pourra donc comprendre, préalablement à l'étape (S1) de tressage, une étape de préparation (S0) au cours de laquelle on prévoit, sur le fil de tresse 1, un premier surplus de longueur de fil de tresse dit « tronçon excédentaire d'entrée » 6_in qui est destiné à précéder le tronçon d'enroulement 5, et l'on réalise dans ledit tronçon excédentaire d'entrée, par pliage plastique, un coude d'entrée 17_in, de manière à conférer audit tronçon excédentaire d'entrée 6_in une forme anguleuse dite « crochet ».

Selon ce procédé, lors de l'étape (S1) de tressage :
- on engage ledit crochet 6_in contre une âme 3 qui matérialise la ligne génératrice L3, de manière à retenir le fil de tresse 1 par rapport à ladite âme 3 lorsque l'on débute l'enroulage dudit fil de tresse 1 en spires 2 hélicoïdales autour de l'âme 3,
- puis l'on poursuit l'enroulage du fil de tresse 1 en spires 2 hélicoïdales autour de l'âme 3, de telle manière que le crochet du tronçon excédentaire d'entrée 6_in reste au moins en partie en saillie par rapport au volume de tresse V5 occupé par lesdites spires 2,
- puis, lorsque la longueur voulue de tronçon d'enroulement 5 est atteinte, on cesse de former des spires 2 hélicoïdales et l'on prévoit, après le tronçon d'enroulement 5, un surplus de longueur de fil de tresse formant un tronçon excédentaire de sortie 6_out, dit aussi « fil libre ».

Toujours selon ce procédé, on exécute l'étape (S2) de pliage de manière à déformer plastiquement le tronçon excédentaire de sortie 6_out pour former un coude de sortie 17_out qui fait saillir une partie dudit tronçon excédentaire de sortie 6_out par rapport au volume de tresse V5.

En outre, ledit procédé comprend, suite à l'étape (S2) de pliage :
- une étape (S3) d'enfoncement au cours de laquelle on vient exercer conjointement une poussée d'enfoncement F_S3 sur le crochet 6_in et sur le fil libre 6_out de manière à décoller des autres spires 2, par flexion élastique du fil de tresse 1, d'une part un tronçon de spire terminale d'entrée 5_in, qui relie le coude d'entrée 17_in au tronçon d'enroulement 5, et d'autre part un tronçon de spire terminale de sortie 5_out, qui relie le tronçon d'enroulement 5 au coude de sortie 17_out, de telle sorte que lesdits tronçon de spire terminale d'entrée 5_in et tronçon de spire terminale de sortie 5_out se croisent en un point de croisement 33 qui est décalé hors du volume de tresse V5 du tore tressé 4,
- puis une étape (S4) de coupe, au cours de laquelle on sectionne le fil de tresse 1, au voisinage du point de croisement 33, d'une part au niveau du tronçon de spire terminale d'entrée 5_in, de sorte à éliminer le coude d'entrée 17_in et le crochet 6_in, et d'autre part au niveau du tronçon de spire terminale de sortie 5_out, de sorte à éliminer le coude de sortie 17_out et le fil libre 6_out,
- puis une étape (S5) de jonction, au cours de laquelle on lie l'un à l'autre le tronçon de spire terminale d'entrée 5_in et le tronçon de spire terminale de sortie 5_out au moyen d'un élément de jonction 46, tel que par exemple un manchon 46 que l'on vient sertir sur lesdits tronçons de spires terminales 5_in, 5_out.

On notera que le crochet 6_in forme avantageusement le point de départ, stable, du tressage du fil de tresse 1 autour de l'âme 3, tandis que le fil libre correspond au point d'arrivée dudit tressage.

Le crochet 6_in pourra avantageusement être formé par un outil de type presse, pourvu de matrices qui correspondront à la géométrie souhaitée dudit crochet 6_in, et plus spécifiquement à l'angle de coude d'entrée A17_in correspondant souhaité.

On notera également que, quel que soit du reste le moment auquel on forme les coudes d'entrée 17_in et de sortie 17_out, le coude d'entrée 17_in et le coude de sortie 17_out sont de préférence agencés pour faire pointer leur tronçon excédentaire d'entrée 6_in, respectivement de sortie 6_out globalement dans la même direction, c'est-à-dire pour faire pointer le tronçon excédentaire d'entrée 6_in et le tronçon excédentaire de sortie 6_out soit tous les deux vers l'intérieur INT du tore tressé 4, soit, de préférence et comme c'est le cas sur les figures 2, 5A et 5B, tous les deux vers l'extérieur EXT du tore tressé 4.

Ceci facilite la manipulation conjointe, et plus particulièrement l'enfoncement conjoint, des deux tronçons excédentaires 6_in, 6_out, et la formation du point de croisement 33.

Bien entendu, l'invention n'est nullement limitée aux seules variantes de mise en œuvre décrites dans ce qui précède, l'homme du métier étant notamment à même d'isoler ou de combiner librement entre elles l'une ou l'autre des caractéristiques susmentionnées, ou de leur substituer des équivalents.

En particulier, il est possible de fabriquer une tringle « multicouches » en réalisant plusieurs tressages successifs distincts autour de la même âme 3, et plus globalement en répétant le procédé conforme à l'invention à plusieurs reprise, *a priori* autant de fois que le nombre de couches que l'on souhaite constituer.

A cet titre, on utilisera donc successivement plusieurs fils de tresse 1 distincts, lesdits fils de tresse étant mis en œuvre individuellement, à raison d'un nouveau fil à chaque réitération du procédé.

Plus particulièrement, on pourra ainsi répéter, autant de fois que nécessaire, typiquement autant de fois que le nombre de couches à réaliser, un cycle "complet" comprenant une étape (S0) de préparation, une étape (S1) de tressage, une étape (S2) de pliage, une étape (S3) d'enfoncement, une étape (S4) de coupe, et une étape (S5) de jonction.

Avantageusement, une tringle multicouches ainsi obtenue présentera une épaisseur et une solidité renforcées.

## Revendications

1. Procédé de fabrication d'une tringle destinée au renfort d'un bandage, tel qu'un bandage pneumatique, ledit procédé comprenant une étape (S1) de tressage au cours de laquelle on enroule un fil de tresse (1) en spires hélicoïdales (2) autour de, et le long de, une ligne génératrice (L3) qui est fermée en anneau sur elle-même autour d'un axe « dit axe principal » (Z3), et l'on décrit ainsi avec ledit fil de tresse (1) plusieurs tours complets successifs en azimut autour de l'axe principal, de sorte à former, autour dudit axe principal (Z3), un élément de tringle dit « tore tressé » (4) au sein duquel le fil de tresse (1) présente d'une part une portion de longueur dite « tronçon d'enroulement » (5) qui correspond aux spires hélicoïdales (2) et qui occupe un volume dit « volume de tresse » (V5), et d'autre part, dans un prolongement dudit tronçon d'enroulement (5), un surplus de longueur de fil de tresse dit « tronçon excédentaire » (6, 6_in, 6_out), ledit procédé comprenant, après l'étape (S1) de tressage, une étape (S2) de pliage au cours de laquelle on déforme plastiquement le tronçon excédentaire (6, 6_in, 6_out) par pliage, de manière à former un coude (17, 17_in, 17_out) qui fait diverger le tronçon excédentaire (6, 6_in, 6_out) par rapport aux spires hélicoïdales (2) et saillir au moins en partie ledit tronçon excédentaire (6, 6_in, 6_out) par rapport au volume de tresse (V5) du tore tressé (4).

2. Procédé selon la revendication 1 **caractérisé en ce que** le coude (17, 17_in, 17_out) forme un angle, dit « angle de coude » (A17, A17_in, A17_out), qui est compris entre 45 degrés et 160 degrés, et de préférence entre 60 degrés et 135 degrés.

3. Procédé selon la revendication 1 ou 2 **caractérisé en ce que** l'étape (S2) de pliage a pour effet d'augmenter la distance qui sépare radialement le tronçon excédentaire (6, 6_in, 6_out) de l'axe principal (Z3).

4. Procédé selon l'une des revendications précédentes **caractérisé en ce que** le volume de tresse (V5) est contenu radialement à l'intérieur d'une limite radiale, dite « limite radiale externe » (RL_ext), par rapport à l'axe principal (Z3), et **en ce que** le coude (17, 17_in, 17_out) est agencé pour maintenir le tronçon excédentaire (6, 6_in, 6_out) au moins en partie en saillie au-delà de ladite limite radiale externe (RL_ext) du volume de tresse (V5).

5. Procédé selon l'une des revendications précédentes **caractérisé en ce qu'**il comprend, suite à l'étape (S2) de pliage, une étape d'enfoncement (S3), au cours de laquelle on vient en prise contre une partie du tronçon excédentaire (6) afin d'exercer sur ladite partie du tronçon excédentaire une poussée d'enfoncement (F_S3) qui est dirigée à l'encontre du coude (17) correspondant et d'une portion d'extrémité du tronçon d'enroulement (5) qui se rattache audit coude (17), dite « tronçon de spire terminale » (5_in, 5_out), de telle manière que l'on décolle ledit tronçon de spire terminale (5_in, 5_out) des autres spires (2), par flexion élastique du fil de tresse (1).

6. Procédé selon la revendication 5 **caractérisé en ce qu'**il comprend, alors que le tronçon de spire terminale (5_in, 5_out) est maintenu décollé des autres spires (2) par flexion élastique conformément à l'étape (S3) d'enfoncement, une étape (S4) de coupe au cours de laquelle on sectionne le fil de tresse (1) au niveau du tronçon de spire terminale (5_in, 5_out), de sorte à éliminer le coude (17) et le tronçon excédentaire (6) correspondants.

7. Procédé selon l'une des revendications précédentes **caractérisé en ce qu'**il comprend, préalablement à l'étape (S1) de tressage, une étape de préparation (S0) au cours de laquelle on prévoit, sur le fil de tresse (1), un premier surplus de longueur de fil de tresse dit « tronçon excédentaire d'entrée » (6_in) qui est destiné à précéder le tronçon d'enroulement (5), et l'on réalise dans ledit tronçon excédentaire d'entrée (6_in), par pliage plastique, un coude d'entrée (17_in), de manière à conférer audit tronçon excédentaire d'entrée (6_in) une forme anguleuse dite « crochet »,
ledit procédé étant ensuite **caractérisé en ce que**, lors de l'étape (S1) de tressage :
- on engage ledit crochet contre une âme (3) qui matérialise la ligne génératrice (L3), de manière à retenir le fil de tresse (1) par rapport à ladite âme (3) lorsque l'on débute l'enroulage dudit fil de tresse (1) en spires hélicoïdales (2) autour de l'âme (3),
- puis l'on poursuit l'enroulage du fil de tresse (1) en spires (2) hélicoïdales autour de l'âme, de telle manière que le crochet du tronçon excédentaire d'entrée (6_in) reste au moins en partie en saillie par rapport au volume de tresse (V5) occupé par lesdites spires (2),
- puis, lorsque la longueur voulue de tronçon d'enroulement (5) est atteinte, on cesse de former des spires (2) hélicoïdales et l'on prévoit, après le tronçon d'enroulement (5), un surplus de longueur de fil de tresse formant un tronçon excédentaire de sortie (6_out), dit aussi « fil libre »,
et **en ce que** l'on exécute l'étape (S2) de pliage de manière à déformer plastiquement le tronçon excédentaire de sortie (6_out) pour former un coude de sortie (17_out) qui fait saillir une partie dudit tronçon excédentaire de sortie (6_out) par rapport au volume de tresse (V5), ledit procédé étant également **caractérisé en ce qu'**il comprend, suite à l'étape (S2) de pliage :
- une étape (S3) d'enfoncement au cours de laquelle on vient exercer conjointement une poussée d'enfoncement (F_S3) sur le crochet (6_in) et sur le fil libre (6_out) de manière à décoller des autres spires (2), par flexion élastique du fil de tresse (1), d'une part un tronçon de spire terminale d'entrée (5_in), qui relie le coude d'entrée (17_in) au tronçon d'enroulement (5), et d'autre part un tronçon de spire terminale de sortie (5_out), qui relie le tronçon d'enroulement (5) au coude de sortie (17_out), de telle sorte que lesdits tronçon de spire terminale d'entrée (5_in) et tronçon de spire terminale de sortie (5_out) se croisent en un point de croisement (33) qui est décalé hors du volume de tresse (V5) du tore tressé (4),
- puis une étape (S4) de coupe, au cours de laquelle on sectionne le fil de tresse (1), au voisinage du point de croisement (33), d'une part au niveau du tronçon de spire terminale d'entrée (5_in), de sorte à éliminer le coude d'entrée (17_in) et le crochet (6_in), et d'autre part au niveau du tronçon de spire terminale de sortie (5_out), de sorte à éliminer le coude de sortie (17_out) et le fil libre (6_out),
- puis une étape (S5) de jonction, au cours de laquelle on lie l'un à l'autre le tronçon de spire terminale d'entrée (5_in) et le tronçon de spire terminale de sortie (5_out) au moyen d'un élément de jonction (46), tel que par exemple un manchon (46) que l'on vient sertir sur lesdits tronçons de spires terminales (5_in, 5_out).

8. Procédé selon l'une des revendications précédentes **caractérisé en ce que**, lors de l'étape (S2) de pliage, on approche une enclume (21) du tore tressé (4), et plus préférentiellement on applique une enclume (21) contre ledit tore tressé (4), et l'on déforme plastiquement le tronçon excédentaire (6, 6_in, 6_out) par pliage à l'encontre de ladite enclume (21), de manière à former le coude (17, 17_in, 17_out).

9. Procédé selon l'une des revendications précédentes **caractérisé en ce que**, lors de l'étape de pliage, on actionne un poinçon (23) mobile pour récupérer le tronçon excédentaire (6, 6_in, 6_out) et réaliser, de préférence à l'encontre d'une enclume (21), le pliage plastique dudit tronçon excédentaire (6, 6_in, 6_out).

10. Procédé selon la revendication 9 **caractérisé en ce que** le poinçon (23) présente une lame de crochetage (27) qui comprend d'une part un tranchant d'appui (28), qui est destiné à venir appuyer sur le tronçon excédentaire (6, 6_in, 6_out) selon une direction (23_mov) transverse à la direction longitudinale d'extension (L6) dudit tronçon excédentaire (6, 6_in, 6_out), et qui est émoussé selon un profil arrondi convexe (28R), et d'autre part au moins une butée latérale (29), de préférence formée par un épaulement, qui est agencée en saillie du tranchant d'appui (28) de sorte à pouvoir stopper un glissement latéral du tronçon excédentaire (6, 6_in, 6_out) le long du tranchant d'appui (28) au cours du mouvement du poinçon (23_mov) qui est nécessaire à la récupération et au pliage du tronçon excédentaire (6, 6_in, 6_out).

11. Procédé selon l'une des revendications précédentes **caractérisé en ce que**, lors de l'étape (S1) de tressage, le fil de tresse (1) qui s'enroule autour de la ligne génératrice (L3) est dévidé depuis un dévidoir (12) contenant une réserve de fil de tresse, et **en ce que**, préalablement à l'étape (S2) de pliage, on libère le fil de tresse (1) du dévidoir (12), en un point qui est choisi pour devenir une extrémité libre du tronçon excédentaire (6, 6_out), puis, lors de l'étape (S2) de pliage, on réalise le coude (17, 17_out) de manière à positionner ladite extrémité libre du tronçon excédentaire (6, 6_out) en saillie par rapport au volume de tresse (V5) du tore tressé (4).

12. Procédé selon l'une quelconque des revendications précédentes **caractérisé en ce que** la ligne génératrice (L3) est matérialisée par une âme (3), monobrin ou multibrins, qui est fermée en anneau sur elle-même autour de l'axe principal (Z3).

13. Installation (9) de fabrication de tringles destinées au renfort d'un bandage, tel qu'un bandage pneumatique, ladite installation (9) comprenant un poste de tressage (10) qui comporte un support de guidage (11) qui définit une trajectoire qui suit une ligne génératrice (L3) qui est fermée en anneau sur elle-même autour d'un axe dit « axe principal » (Z3), un dévidoir (12) agencé pour amener un fil de tresse (1), de préférence métallique, et pour coopérer avec le support de guidage (11) afin d'enrouler ledit fil de tresse (1) en spires hélicoïdales (2) autour de, et le long de, ladite ligne génératrice (L3) sur plusieurs tours complets successifs en azimut autour de l'axe principal (Z3) de sorte à former, autour dudit axe principal (Z3), un élément de tringle dit « tore tressé » (4), au sein duquel le fil de tresse (1) présente d'une part une portion de longueur dite « tronçon d'enroulement » (5) qui correspond aux spires hélicoïdales (2) et qui occupe un volume dit « volume de tresse » (V5), et d'autre part, dans un prolongement dudit tronçon d'enroulement (5), un surplus de longueur de fil de tresse dit « tronçon excédentaire » (6, 6_in, 6_out), ladite installation (9) comprenant également un outil de pliage (20), distinct du dévidoir (12), et agencé pour venir récupérer, après l'opération de tressage, le tronçon excédentaire (6, 6_in, 6_out) et réaliser un pliage plastique dudit tronçon excédentaire (6, 6_in, 6_out) de manière à former un coude (17, 17_in, 17_out) qui fait diverger le tronçon excédentaire (6, 6_in, 6_out) par rapport aux spires hélicoïdales (2) et saillir au moins en partie ledit tronçon excédentaire (6, 6_in, 6_out) par rapport au volume de tresse (V5) du tore tressé (4).

14. Installation selon la revendication 13 **caractérisée en ce que** l'outil de pliage (20) comprend :
- une enclume (21), escamotable, qui est mobile entre d'une part une première position, dite « position reculée », qu'elle occupe pendant l'opération de tressage et dans laquelle ladite enclume (21) est suffisamment éloignée de la ligne génératrice (L3) pour ne pas interférer avec l'opération de tressage ni le tore tressé (4) en cours de réalisation, et d'autre part une seconde position, dite « position avancée », que ladite enclume (21) adopte pour l'opération de pliage, et dans laquelle ladite enclume (21) est plus proche du tore tressé (4) que dans la première position, et de préférence dans laquelle ladite enclume (21) est appuyée contre ledit tore tressé (4),
- et un poinçon (23), qui est mobile relativement à ladite enclume (21) et agencé pour venir récupérer le tronçon excédentaire (6_, 6_in, 6_out) et rabattre ledit tronçon excédentaire (6_, 6_in, 6_out) à l'encontre de l'enclume (21) pour causer la déformation plastique qui est nécessaire à la formation du coude (17, 17_in, 17_out).

15. Installation selon la revendication 13 ou 14 **caractérisée en ce qu'**elle comporte :
- un poussoir (30) agencé pour venir exercer, sur une partie du tronçon excédentaire (6), une poussée d'enfoncement (F_S3) qui est dirigée à l'encontre à la fois du coude (17) et d'une portion d'extrémité du tronçon d'enroulement (5) qui se rattache audit coude (17), dite « tronçon de spire terminale » (5_in, 5_out), de sorte à pouvoir décoller ledit tronçon de spire terminale (5_in, 5_out) des autres spires (2), par flexion élastique du fil de tresse (1),
- ainsi qu'un outil de coupe (40) agencé pour pouvoir sectionner le fil de tresse (1) au niveau du tronçon de spire terminale (5_in, 5_out) considéré, tandis que ledit tronçon de spire terminale (5_in, 5_out) est décollé des autres spires (2), de sorte à pouvoir éliminer le coude (17) et le tronçon excédentaire (6) correspondants.

## Patentansprüche

1. Verfahren zur Herstellung eines Wulstkerns, der zur Verstärkung eines Reifens, wie etwa eines Luftreifens, bestimmt ist, wobei das Verfahren einen Flechtschritt (S1) beinhaltet, bei dem ein Flechtdraht (1) in spiralförmigen Windungen (2) um eine und entlang einer Erzeugenden (L3) gewickelt wird, welche um eine Achse, als "Hauptachse" (Z3) bezeichnet, ringförmig in sich geschlossen ist, und so mit dem Flechtdraht (1) mehrere aufeinanderfolgende vollständige Runden im Azimut um die Hauptachse beschrieben werden, um um die Hauptachse (Z3) ein Wulstkernelement, als "geflochtener Torus" (4) bezeichnet, zu bilden, innerhalb dessen der Flechtdraht (1) einerseits ein Längenteilstück, als "Wicklungsabschnitt" (5) bezeichnet, das den spiralförmigen Windungen (2) entspricht und das ein Volumen, als "Flechtvolumen" (V5) bezeichnet, einnimmt, und andererseits in einer Verlängerung des Wicklungsabschnitts (5) eine Flechtdrahtüberlänge, als "überstehender Abschnitt" (6, 6_in, 6_out) bezeichnet, aufweist, wobei das Verfahren nach dem Flechtschritt (S1) einen Biegeschritt (S2) beinhaltet, bei dem der überstehende Abschnitt (6, 6_in, 6_out) durch Biegen plastisch verformt wird, um einen Bogen (17, 17_in, 17_out) zu bilden, der den überstehenden Abschnitt (6, 6_in, 6_out) in Bezug auf die spiralförmigen Windungen (2) ablenkt und den überstehenden Abschnitt (6, 6_in, 6_out) in Bezug auf das Flechtvolumen (V5) des geflochtenen Torus (4) mindestens teilweise vorstehen lässt.

2. Verfahren nach Anspruch 1, **dadurch gekennzeichnet, dass** der Bogen (17, 17_in, 17_out) einen Winkel, als "Bogenwinkel" (A17, A17_in, A17_out) bezeichnet, bildet, der zwischen 45 Grad und 160 Grad und vorzugsweise zwischen 60 Grad und 135 Grad beträgt.

3. Verfahren nach Anspruch 1 oder 2, **dadurch gekennzeichnet, dass** der Biegeschritt (S2) eine Erhöhung des Abstands bewirkt, der den überstehenden Abschnitt (6, 6_in, 6_out) von der Hauptachse (Z3) radial trennt.

4. Verfahren nach einem der vorhergehenden Ansprüche, **dadurch gekennzeichnet, dass** das Flechtvolumen (V5) in Bezug auf die Hauptachse (Z3) radial innerhalb einer radialen Begrenzung, als "äußere radiale Begrenzung" (RL_ext) bezeichnet, enthalten ist und dass der Bogen (17, 17_in, 17_out) dazu angeordnet ist, den überstehenden Abschnitt (6, 6_in, 6_out) mindestens teilweise außerhalb der äußeren radialen Begrenzung (RL_ext) des Flechtvolumens (V5) vorstehend zu halten.

5. Verfahren nach einem der vorhergehenden Ansprüche, **dadurch gekennzeichnet, dass** es im Anschluss an den Biegeschritt (S2) einen Schubschritt (S3) beinhaltet, bei dem gegen einen Teil des überstehenden Abschnitts (6) gedrückt wird, um auf den Teil des überstehenden Abschnitts eine Schubkraft (F_S3) auszuüben, die gegen den entsprechenden Bogen (17) und ein Endteilstück des Wicklungsabschnitts (5), der an den Bogen (17) anschließt, als "Windungsendabschnitt" (5_in, 5_out) bezeichnet, gerichtet ist, damit der Windungsendabschnitt (5_in, 5_out) durch elastisches Wegbiegen des Flechtdrahts (1) von den anderen Windungen (2) abgehoben wird.

6. Verfahren nach Anspruch 5, **dadurch gekennzeichnet, dass** es, während der Windungsendabschnitt (5_in, 5_out) durch elastisches Wegbiegen gemäß dem Schubschritt (S3) von den anderen Windungen (2) abgehoben gehalten wird, einen Schneidschritt (S4) beinhaltet, bei dem der Flechtdraht (1) im Bereich des Windungsendabschnitts (5_in, 5_out) zertrennt wird, um den entsprechenden Bogen (17) und überstehenden Abschnitt (6) zu entfernen.

7. Verfahren nach einem der vorhergehenden Ansprüche, **dadurch gekennzeichnet, dass** es vor dem Flechtschritt (S1) einen Vorbereitungsschritt (S0) beinhaltet, bei dem an dem Flechtdraht (1) eine erste Flechtdrahtüberlänge, als "überstehender Anfangsabschnitt" (6_in) bezeichnet, vorgesehen wird, der dazu bestimmt ist, dem Wicklungsabschnitt (5) vorauszugehen, und in dem überstehenden Anfangsabschnitt (6_in) durch plastisches Biegen ein Anfangsbogen (17_in) realisiert wird, um dem überstehenden Anfangsabschnitt (6_in) eine Winkelform, als "Haken" bezeichnet, zu verleihen,
wobei das Verfahren anschließend **dadurch gekennzeichnet ist, dass** während des Flechtschritts (S1):
- der Haken an einem Kern (3), der die Erzeugende (L3) verkörpert, verankert wird, um den Flechtdraht (1) in Bezug auf den Kern (3) festzuhalten, wenn mit dem Wickeln des Flechtdrahts (1) in spiralförmigen Windungen (2) um den Kern (3) begonnen wird,
- dann mit dem Wickeln des Flechtdrahts (1) in spiralförmigen Windungen (2) um den Kern fortgefahren wird, sodass der Haken des überstehenden Anfangsabschnitts (6_in) in Bezug auf das Flechtvolumen (V5), das durch die Windungen (2) eingenommen wird, mindestens teilweise vorstehend bleibt,
- dann, wenn die gewünschte Länge des Wicklungsabschnitts (5) erreicht ist, das Bilden der spiralförmigen Windungen (2) eingestellt wird und hinter dem Wicklungsabschnitt (5) eine Flechtdrahtüberlänge vorgesehen wird, die einen überstehenden Abschlussabschnitt (6_out), auch als "freier Draht" bezeichnet, bildet,
und dass der Biegeschritt (S2) so ausgeführt wird, dass der überstehende Abschlussabschnitt (6_out) plastisch verformt wird, um einen Abschlussbogen (17_out) zu bilden, der einen Teil des überstehenden Abschlussabschnitts (6_out) in Bezug auf das Flechtvolumen (V5) vorstehen lässt, wobei das Verfahren ferner **dadurch gekennzeichnet ist, dass** es im Anschluss an den Biegeschritt (S2) Folgendes beinhaltet:
- einen Schubschritt (S3), bei dem eine Schubkraft (F_S3) gemeinsam auf den Haken (6_in) und auf den freien Draht (6_out) ausgeübt wird, um durch elastisches Wegbiegen des Flechtdrahts (1) einerseits einen Anfangswindungsendabschnitt (5_in), der den Anfangsbogen (17_in) mit dem Wicklungsabschnitt (5) verbindet, und andererseits einen Abschlusswindungsendabschnitt (5_out), der den Wicklungsabschnitt (5) mit dem Abschlussbogen (17_out) verbindet, von den anderen Windungen (2) abzuheben, sodass sich der Anfangswindungsendabschnitt (5_in) und der Abschlusswindungsendabschnitt (5_out) in einem Kreuzungspunkt (33) kreuzen, welcher aus dem Flechtvolumen (V5) des geflochtenen Torus (4) heraus verschoben ist,
- dann einen Schneidschritt (S4), bei dem der Flechtdraht (1) in der Nähe des Kreuzungspunkts (33) einerseits im Bereich des Anfangswindungsendabschnitts (5_in), um den Anfangsbogen (17_in) und den Haken (6_in) zu entfernen, und andererseits im Bereich des Abschlusswindungsendabschnitts (5_out), um den Abschlussbogen (17_out) und den freien Draht (6_out) zu entfernen, zertrennt wird,
- dann einen Verbindungsschritt (S5), bei dem der Anfangswindungsendabschnitt (5_in) und der Abschlusswindungsendabschnitt (5_out) mit Hilfe eines Verbindungselements (46), wie etwa beispielsweise einer Hülse (46), die auf die Windungsendabschnitte (5_in, 5_out) gecrimpt wird, miteinander verbunden werden.

8. Verfahren nach einem der vorhergehenden Ansprüche, **dadurch gekennzeichnet, dass** während des Biegeschritts (S2) ein Amboss (21) an den geflochtenen Torus (4) angenähert wird und noch bevorzugter ein Amboss (21) gegen den geflochtenen Torus (4) angelegt wird und der überstehende Abschnitt (6, 6_in, 6_out) durch Biegen gegen den Amboss (21) plastisch verformt wird, um den Bogen (17, 17_in, 17_out) zu bilden.

9. Verfahren nach einem der vorhergehenden Ansprüche, **dadurch gekennzeichnet, dass** während des Biegeschritts ein beweglicher Stempel (23) betätigt wird, um den überstehenden Abschnitt (6, 6_in, 6_out) zu holen und, vorzugsweise gegen einen Amboss (21), das plastische Biegen des überstehenden Abschnitts (6, 6_in, 6_out) zu realisieren.

10. Verfahren nach Anspruch 9, **dadurch gekennzeichnet, dass** der Stempel (23) eine Verhakungsklinge (27) aufweist, die einerseits eine Anlagekante (28), die dazu bestimmt ist, gemäß einer zur der Längserstreckungsrichtung (L6) des überstehenden Abschnitts (6, 6_in, 6_out) quer verlaufenden Richtung (23_mov) auf den überstehenden Abschnitt (6, 6_in, 6_out) zu drücken, und die gemäß einem konvexen abgerundeten Profil (28R) abgestumpft ist, und andererseits mindestens einen seitlichen Anschlag (29), der vorzugsweise durch einen Absatz gebildet wird und von der Anlagekante (28) vorstehend angeordnet ist, um während der Bewegung des Stempels (23_mov), die zum Holen und Biegen des überstehenden Abschnitts (6, 6_in, 6_out) erforderlich ist, ein seitliche Gleiten des überstehenden Abschnitts (6, 6_in, 6_out) entlang der Anlagekante (28) stoppen zu können, beinhaltet.

11. Verfahren nach einem der vorhergehenden Ansprüche, **dadurch gekennzeichnet, dass** während des Flechtschritts (S1) der Flechtdraht (1), der um die Erzeugende (L3) gewickelt wird, von einer Haspel (12) abgespult wird, die eine Flechtdrahtreserve enthält, und dass vor dem Biegeschritt (S2) der Flechtdraht (1) an einem Punkt, der dazu ausgewählt wird, ein freies Ende des überstehenden Abschnitts (6, 6_out) zu werden, von der Haspel (12) getrennt wird und dann während des Biegeschritts (S2) der Bogen (17, 17_out) so realisiert wird, dass das freie Ende des überstehenden Abschnitts (6, 6_out) in Bezug auf das Flechtvolumen (V5) des geflochtenen Torus (4) vorstehend positioniert wird.

12. Verfahren nach einem der vorhergehenden Ansprüche, **dadurch gekennzeichnet, dass** die Erzeugende (L3) durch einen Kern (3), einsträngig oder mehrsträngig, verkörpert wird, der um die Hauptachse (Z3) ringförmig in sich geschlossen ist.

13. Anlage (9) zur Herstellung von Wulstkernen, die zur Verstärkung eines Reifens, wie etwa eines Luftreifens, bestimmt sind, wobei die Anlage (9) Folgendes beinhaltet: eine Flechtstation (10), die einen Führungsträger (11) umfasst, der einen Verlauf definiert, der einer Erzeugenden (L3) folgt, die um eine Achse, als "Hauptachse" (Z3) bezeichnet, ringförmig in sich geschlossen ist, eine Haspel (12), die dazu angeordnet ist, einen Flechtdraht (1), vorzugsweise aus Metall, zuzuführen und mit dem Führungsträger (11) zusammenzuwirken, um den Flechtdraht (1) in spiralförmigen Windungen (2) über mehrere aufeinanderfolgende vollständige Runden im Azimut um die Hauptachse (Z3) um die und entlang der Erzeugenden (L3) zu wickeln, um um die Hauptachse (Z3) ein Wulstkernelement, als "geflochtener Torus" (4) bezeichnet, zu bilden, innerhalb dessen der Flechtdraht (1) einerseits ein Längenteilstück, als "Wicklungsabschnitt" (5) bezeichnet, das den spiralförmigen Windungen (2) entspricht und das ein Volumen, als "Flechtvolumen" (V5) bezeichnet, einnimmt, und andererseits in einer Verlängerung des Wicklungsabschnitt (5) eine Flechtdrahtüberlänge, als "überstehender Abschnitt" (6, 6_in, 6_out) bezeichnet, aufweist, wobei die Anlage (9) ferner ein Biegewerkzeug (20) beinhaltet, das von der Haspel (12) getrennt ist und dazu angeordnet ist, nach dem Flechtvorgang den überstehenden Abschnitt (6, 6_in, 6_out) zu holen und ein plastisches Biegen des überstehenden Abschnitts (6, 6_in, 6_out) zu realisieren, um einen Bogen (17, 17_in, 17_out) zu bilden, der den überstehenden Abschnitt (6, 6_in, 6_out) in Bezug auf die spiralförmigen Windungen (2) ablenkt und den überstehenden Abschnitt (6, 6_in, 6_out) in Bezug auf das Flechtvolumen (V5) des geflochtenen Torus (4) mindestens teilweise vorstehen lässt.

14. Anlage nach Anspruch 13, **dadurch gekennzeichnet, dass** das Biegewerkzeug (20) Folgendes beinhaltet:
- einen Amboss (21), der einziehbar ist und der zwischen einerseits einer ersten Position, als "zurückgezogene Position" bezeichnet, die er während des Flechtvorgangs einnimmt und in der der Amboss (21) von der Erzeugenden (L3) weit genug entfernt ist, um weder den Flechtvorgang noch den in Realisierung befindlichen geflochtenen Torus (4) zu stören, und andererseits einer zweiten Position, als "vorgerückte Position" bezeichnet, die der Amboss (21) für den Biegevorgang annimmt und in der sich der Amboss (21) näher an dem geflochtenen Torus (4) befindet als in der ersten Position und in der der Amboss (21) vorzugsweise gegen den geflochtenen Torus (4) gedrückt wird, beweglich ist,
- und einen Stempel (23), der relativ zu dem Amboss (21) beweglich ist und dazu angeordnet ist, den überstehenden Abschnitt (6_, 6_in, 6_out) zu holen und den überstehenden Abschnitt (6_, 6_in, 6_out) gegen den Amboss (21) zu führen, um die plastische Verformung zu bewirken, die zur Bildung des Bogens (17, 17_in, 17_out) erforderlich ist.

15. Anlage nach Anspruch 13 oder 14, **dadurch gekennzeichnet, dass** sie Folgendes umfasst:
- einen Schieber (30), der dazu angeordnet ist, auf einen Teil des überstehenden Abschnitts (6) eine Schubkraft (F_S3) auszuüben, die gleichzeitig gegen den Bogen (17) und ein Endteilstück des Wicklungsabschnitts (5), der an den Bogen (17) anschließt, als "Windungsendabschnitt" (5_in, 5_out) bezeichnet, gerichtet ist, um den Windungsendabschnitt (5_in, 5_out) durch elastisches Wegbiegen des Flechtdrahts (1) von den anderen Windungen (2) abheben zu können,
- sowie ein Schneidwerkzeug (40), das dazu angeordnet ist, den Flechtdraht (1) im Bereich des betrachteten Windungsendabschnitts (5_in, 5_out) zertrennen zu können, während der Windungsendabschnitt (5_in, 5_out) von den anderen Windungen (2) abgehoben ist, um den entsprechenden Bogen (17) und überstehenden Abschnitt (6) entfernen zu können.

## Claims

1. Method for producing a bead wire intended for the reinforcement of a tyre, such as a pneumatic tyre, said method comprising a braiding step (S1) during which a braid wire (1) is wound in helical turns (2) about, and along, a generatrix line (L3) which is closed in a ring on itself about an axis called "main axis" (Z3), and several successive complete turns in azimuth about the main axis are thus described with said braid wire (1), so as to form, about said main axis (Z3), a bead wire element called "braided torus" (4) within which the braid wire (1) has, on the one hand, a portion of length called "winding section" (5) which corresponds to the helical turns (2) and which occupies a volume called "braid volume" (V5), and, on the other hand, in an extension of said winding section (5), a surplus length of braid wire called "excess section" (6, 6_in, 6_out), said method comprising, after the braiding step (S1), a folding step (S2) during which the excess section (6, 6_in, 6_out) is deformed plastically by folding, so as to form an elbow (17, 17_in, 17_out) which makes the excess section (6, 6_in, 6_out) diverge with respect to the helical turns (2) and makes said excess section (6, 6_in, 6_out) protrude at least partly with respect to the braid volume (V5) of the braided torus (4).

2. Method according to Claim 1, **characterized in that** the elbow (17, 17_in, 17_out) forms an angle, called "elbow angle" (A17, A17_in, A17_out), which lies between 45 degrees and 160 degrees, and preferably between 60 degrees and 135 degrees.

3. Method according to Claim 1 or 2, **characterized in that** the folding step (S2) has the effect of increasing the distance which radially separates the excess section (6, 6_in, 6_out) with respect to the main axis (Z3).

4. Method according to one of the preceding claims, **characterized in that** the braid volume (V5) is contained radially within a radial limit, called "outer radial limit" (RL_ext), relative to the main axis (Z3), and **in that** the elbow (17, 17_in, 17_out) is arranged to keep the excess section (6, 6_in, 6_out) at least partly protruding beyond said outer radial limit (RL_ext) of the braid volume (V5).

5. Method according to one of the preceding claims, **characterized in that** it comprises, following the folding step (S2), a driving step (S3), during which there is engagement against a part of the excess section (6) in order to exert, on said part of the excess section, a driving thrust (F_S3) which is directed against the corresponding elbow (17) and an end portion of the winding section (5) which is attached to said elbow (17), called "end turn section" (5_in, 5_out), such that said end turn section (5_in, 5_out) is separated from the other turns (2), by elastic flexing of the braid wire (1).

6. Method according to Claim 5, **characterized in that** it comprises, while the end turn section (5_in, 5_out) is kept separated with respect to the other turns (2) by elastic flexing in accordance with the driving step (S3), a cutting step (S4) during which the braid wire (1) is cut at the end turn section (5_in, 5_out), so as to eliminate the corresponding elbow (17) and excess section (6).

7. Method according to one of the preceding claims, **characterized in that** it comprises, prior to the braiding step (S1), a preparation step (S0) during which there is provided, on the braid wire (1), a first surplus length of braid wire called "input excess section" (6_in) which is intended to precede the winding section (5), and an input elbow (17_in) is produced in said input excess section (6_in), by plastic folding, so as to give said input excess section (6_in) an angular form called "hook",
said method being then **characterized in that**, in the braiding step (S1):
- said hook is engaged against a core (3) which embodies the generatrix line (L3), so as to retain the braid wire (1) relative to said core (3) when the winding of said braid wire (1) in helical turns (2) about the core (3) is begun,
- then, the winding of the braid wire (1) in helical turns (2) about the core is continued, so that the hook of the input excess section (6_in) remains at least partly protruding relative to the braid volume (V5) occupied by said turns (2),
- then, when the desired length of winding section (5) is reached, the forming of the helical turns (2) is stopped and, after the winding section (5), a surplus length of braid wire is provided forming an output excess section (6_out), also called "free wire", and **in that** the folding step (S2) is executed so as to plastically deform the output excess section (6_out) to form the output elbow (17_out) which makes a part of said output excess section (6_out) protrude with respect to the braid volume (V5),
said method being also **characterized in that** it comprises, following the folding step (S2):
- a driving step (S3) during which a driving thrust (F_S3) is exerted jointly on the hook (6_in) and on the free wire (6_out) so as to separate from the other turns (2), by elastic flexing of the braid wire (1), on the one hand, an input end turn section (5_in), which links the input elbow (17_in) to the winding section (5), and, on the other hand, an output end turn section (5_out), which links the winding section (5) to the output elbow (17_out), such that said input end turn section (5_in) and output end turn section (5_out) cross at a crossing point (33) which is offset out of the braid volume (V5) of the braided torus (4),
- then a cutting step (S4), during which the braid wire (1) is cut, in the vicinity of the crossing point (33), on the one hand, at the input end turn section (5_in), so as to eliminate the input elbow (17_in) and the hook (6_in), and, on the other hand, at the output end turn section (5_out), so as to eliminate the output elbow (17_out) and the free wire (6_out),
- then a joining step (S5), during which the input end turn section (5_in) and the output end turn section (5_out) are linked to one another by means of a joining element (46), such as, for example, a sleeve (46) that is crimped on said end turn sections (5_in, 5_out).

8. Method according to one of the preceding claims, **characterized in that**, in the folding step (S2), an anvil (21) is offered up to the braided torus (4), and more preferentially, an anvil (21) is applied against said braided torus (4), and the excess section (6, 6_in, 6_out) is plastically deformed by folding against said anvil (21), so as to form the elbow (17, 17_in, 17_out).

9. Method according to one of the preceding claims, **characterized in that**, in the folding step, a movable punch (23) is actuated to recover the excess section (6, 6_in, 6_out) and perform, preferably against an anvil (21), the plastic folding of said excess section (6, 6_in, 6_out).

10. Method according to Claim 9, **characterized in that** the punch (23) has a hooking blade (27) which comprises, on the one hand, a supporting edge (28), which is intended to press on the excess section (6, 6_in, 6_out) in a direction (23_mov) transversal to the longitudinal direction of extension (L6) of said excess section (6, 6_in, 6_out), and which is blunted by a convex rounded profile (28R), and, on the other hand, at least one lateral abutment (29), preferably formed by a shoulder, which is arranged protruding with respect to the supporting edge (28) so as to be able to stop a lateral sliding of the excess section (6, 6_in, 6_out) along the supporting edge (28) during the movement of the punch (23_mov) which is necessary to the recovery and to the folding of the excess section (6, 6_in, 6_out).

11. Method according to one of the preceding claims, **characterized in that**, in the braiding step (S1), the braid wire (1) which is wound about the generatrix line (L3) is paid out from a reel (12) containing a reserve of braid wire, and **in that**, prior to the folding step (S2), the braid wire (1) is released from the reel (12), at a point which is chosen to become a free end of the excess section (6, 6_out), then, in the folding step (S2), the elbow (17, 17_out) is produced so as to position said free end of the excess section (6, 6_out) protruding with respect to the braid volume (V5) of the braided torus (4).

12. Method according to any one of the preceding claims, **characterized in that** the generatrix line (L3) is embodied by a core (3), single-strand or multi-strand, which is closed in a ring on itself about the main axis (Z3).

13. Installation (9) for producing bead wires intended for the reinforcement of a tyre, such as a pneumatic tyre, said installation (9) comprising a braiding station (10) which comprises a guiding support (11) which defines a path which follows a generatrix line (L3) which is closed in a ring on itself about an axis called "main axis" (Z3), a reel (12) arranged to bring a braid wire (1) preferably metallic, and to cooperate with the guiding support (11) in order to wind said braid wire (1) in helical turns (2) about, and along, said generatrix line (L3) over several successive complete turns in azimuth about the main axis (Z3) so as to form, about said main axis (Z3), a bead wire element called "braided torus" (4), within which the braid wire (1) has, on the one hand, a portion of length called "winding section" (5) which corresponds to the helical turns (2) and which occupies a volume called "braid volume" (V5), and, on the other hand, in an extension of said winding section (5), a surplus length of braid wire called "excess section" (6, 6_in, 6_out), said installation (9) also comprising a folding tool (20), distinct with respect to the reel (12), and arranged to recover, after the braiding operation, the excess section (6, 6_in, 6_out) and perform a plastic folding of said excess section (6, 6_in, 6_out) so as to form an elbow (17, 17_in, 17_out) which makes the excess section (6, 6_in, 6_out) diverge with respect to the helical turns (2) and makes said excess section (6, 6_in, 6_out) protrude at least partly with respect to the braid volume (V5) of the braided torus (4).

14. Installation according to Claim 13, **characterized in that** the folding tool (20) comprises:
- a retractable anvil (21), which is movable between, on the one hand, a first position, called "retracted position", that it occupies during the braiding operation and in which said anvil (21) is sufficiently far away from the generatrix line (L3) not to interfere with the braiding operation or the braided torus (4) being produced, and, on the other hand, a second position, called "extended position", that said anvil (21) adopts for the folding operation, and in which said anvil (21) is closer to the braided torus (4) than in the first position, and preferably in which said anvil (21) is pressed against said braided torus (4),
- and a punch (23), which is movable relative to said anvil (21) and arranged to recover the excess section (6_, 6_in, 6_out) and fold back said excess section (6_, 6_in, 6_out) against the anvil (21) to cause the plastic deformation which is necessary to the formation of the elbow (17, 17_in, 17_out).

15. Installation according to Claim 13 or 14, **characterized in that** it comprises:
- a pusher (30) arranged to exert, on a part of the excess section (6), a driving thrust (F_S3) which is directed against both the elbow (17) and an end portion of the winding section (5) which is attached to said elbow (17), called "end turn section" (5_in, 5_out), so as to be able to separate said end turn section (5_in, 5_out) from the other turns (2), by elastic flexing of the braid wire (1),
- and a cutting tool (40) arranged to be able to cut the braid wire (1) at the end turn section (5_in, 5_out) concerned, while said end turn section (5_in, 5_out) is separated from the other turns (2), so as to be able to eliminate the corresponding elbow (17) and excess section (6).
